Europäisches Patentamt

(19) European Patent Office

Office européen des brevets

(11) Veröffentlichungsnummer : **0 053 779**
**B1**

(12) **EUROPÄISCHE PATENTSCHRIFT**

(45) Veröffentlichungstag der Patentschrift :
04.07.84

(21) Anmeldenummer : **81109999.3**

(22) Anmeldetag : **30.11.81**

(51) Int. Cl.³ : **B 01 D 25/12**

(54) **Filterschichtanordnung und Verfahren zu deren Herstellung sowie Vorrichtung zur Durchführung des Verfahrens.**

(30) Priorität : **10.12.80 CH 9084/80**

(43) Veröffentlichungstag der Anmeldung :
**16.06.82 Patentblatt 82/24**

(45) Bekanntmachung des Hinweises auf die Patenterteilung : **04.07.84 Patentblatt 84/27**

(84) Benannte Vertragsstaaten :
**AT BE DE FR GB IT**

(56) Entgegenhaltungen :
**CH-A-    529 579**
**CH-A-    565 017**
**DE-C-      64 308**

(73) Patentinhaber : **Filtrox-Werk A.G.**
**Moosmühlenstrasse 6**
**CH-9030 St. Gallen (CH)**

(72) Erfinder : **Ryffel, Carl, Dr.**
**Lehhaldenstrasse 4**
**CH-9030 Abtwil/SG (CH)**
Erfinder : **Giger, Karl**
**Weidstrasse 7**
**CH-9302 Kronbühl/SG (CH)**

(74) Vertreter : **Steudtner, Werner, Dipl.-Ing.**
**Lindenhof 5**
**CH-8604 Hegnau (CH)**

## Beschreibung

Die Erfindung bezieht sich auf eine Filterschichtanordnung für Filterpressen mit zwei gesonderten, zur Bedeckung von je einer Filterplattenseite vorgesehen, im wesentlichen rechteckigen Filterschichten und einer zum Ueberhängen der Filterschichtanordnung über eine Filterplatte oder einen Filterrahmen vorgesehenen, im Bereich von je einer Kante der beiden Filterschichten angeordneten Verbindung zwischen den beiden Filterschichten, wobei an diesen im Verbindungsbereich liegenden Kanten der beiden Filterschichten je eine nicht zu dem zur Bedeckung einer Filterplattenseite vorgesehenen Bereich der betreffenden Filterschicht gehörende Randzone vorgesehen ist und die Mittel zur Verbindung der beiden Filterschichten die zwischen dem zur Bedeckung einer Filterplattenseite vorgesehenen Bereich der einen Filterschicht und der Randzone derselben liegende Grenzlinie mit der entsprechenden Grenzlinie der anderen Filterschicht verbinden ; ferner bezieht sich die Erfindung auf ein Verfahren zur Herstellung einer solchen Filterschichtanordnung sowie auf eine Einrichtung zur Durchführung dieses Verfahrens.

Filterschichtanordnungen der vorgenannten Art sind beispielsweise aus der CH-A-529.579 und der DE-B-22 44 876 bekannt. Bei diesen bekannten, in der Praxis bewährten Filterschichtanordnungen sind als Mittel zur Verbindung der beiden Filterschichten gesonderte zusammenfaltbare Verbindungsmittel vorgesehen, die an den genannten Randzonen der Filterschichten angebracht sind und zusammen mit diesen im in die Filterpresse eingespanntem Zustand ein im Querschnitt U-förmiges Teilglied der Filterschichtanordnung bilden, das sich mit seinem mittleren Teil auf der Filterplatte bzw. auf dem Filterrahmen abstützt und mit seinen nach oben weisenden äusseren Schenkeln die Filterplatte bzw. Filterrahmen überragt. Als Verbindungsmittel ist dabei in der Regel entweder ein bandförmiges zusammenfaltbares Verbindungsglied von der Breite der Filterschichtanordnung entsprechender Länge, das an den genannten Randzonen der beiden Filterschichten durch Nähte, Klammern oder andere Befestigungsmittel oder auch durch Klebung befestigt ist, oder eine die beiden Filterschichten verbindende und bei einem der Dicke der Filterplatte bzw. Filterrahmens entsprechenden Abstand voneinander zusammenhaltende, längs der genannten Grenzlinien verlaufende Naht von der Breite der Filterschichtanordnung entsprechender Länge vorgesehen. Mit diesen bekannten Filterschichtanordnungen konnten die bei den früher für den gleichen Zweck eingesetzten, im wesentlichen aus einer gefalteten Doppelschicht bestehenden sogenannten Faltschichten entstandenen Schwierigkeiten hinsichtlich der Einreiss- und Abreissgefahr an den Faltstellen und des zur Verringerung dieser Gefahr erforderlichen Transportes der Faltschichten im ungefalteten Zustand vollständig beseitigt werden.

Bei den vorgenannten bekannten Filterschichtanordnungen war jedoch die Anbringung der genannten Verbindungsmittel zwischen den beiden Filterschichten — jedenfalls im Vergleich zum Falten einer Doppelschicht zu einer Faltschicht — noch ein relativ arbeitsintensiver und insbesondere auch verhältnismässig zeitaufwändiger Vorgang, der schon wegen der gegenüber den Zeitabständen, in denen eine Filterschichtenstrasse Filterschichten anliefert, wesentlich längeren erforderlichen Zeitspanne für die Anbringung der genannten Verbindungsmittel zwischen den beiden Filterschichten bisher noch nicht in die automatische Fertigung einbezogen werden konnte. Insbesondere dann, wenn als Verbindungsmittel dienende bandförmige Verbindungsglieder an den genannten Randzonen durch Nähte befestigt wurden, oder wenn die beiden Filterschichten durch eine als Verbindungsmittel dienende Naht verbunden wurden, war der erforderliche Zeitaufwand dafür relativ gross, weil die Nähte zur Befestigung des Verbindungsgliedes bzw. die die beiden Filterschichten verbindende Naht ja eine der Breite der Filterschichtanordnung entsprechende Länge haben müssen und zur Erreichung dieser Nahtlänge eine grosse Anzahl von zeitlich aufeinanderfolgenden Stichen erforderlich ist. Zudem erfordert die Anbringung eines als Verbindungsmittel dienenden bandförmigen Verbindungsgliedes an den beiden Filterschichten auch mehrere aufeinanderfolgende Arbeitsgänge wie das Einrichten, Fixieren und Befestigen des Verbindungsgliedes an der einen Filterschicht, ein anschliessendes Wenden der Filterschichtanordnung und dann das Einrichten, Fixieren und Befestigen des Verbindungsgliedes an der anderen Filterschicht, was entweder bei Benützung ein und derselben Maschine für die aufeinanderfolgenden Arbeitsgänge den Zeitaufwand für die Anbringung des Verbindungsgliedes oder bei Benutzung von mehreren nacheinander angeordneten Maschinen für die einzelnen aufeinanderfolgenden Arbeitsgänge den Kostenaufwand für die Anbringung des Verbindungsgliedes erhöht. Es bestand daher schon seit längerer Zeit das Bedürfnis, bei Filterschichtanordnungen der eingangs genannten Art die Verbindungsmittel und deren Anbringung an den beiden Filterschichten zu vereinfachen, um dadurch auch die Möglichkeit zu schaffen, die Herstellung der Verbindung zwischen den beiden Filterschichten mit einem vertretbaren technischen Aufwand in den automatischen Fertigungsprozess mit einbeziehen zu können. Ein erster Schritt in Richtung einer solchen Vereinfachung der Verbindungsmittel und deren Anbringung war die bereits genannte, als Verbindungsmittel dienende Naht zwischen den beiden Filterschichten, die jedoch aus den schon oben erwähnten Gründen wegen des zu ihrer Herstellung erforderlichen Zeitaufwandes noch nicht die Möglichkeit eröffnete, die Herstellung der Verbindung zwischen den beiden Filterschichten in den automatischen Fertigungsprozess mit einzubeziehen.

Der Erfindung lag daher die Aufgabe zugrunde, eine Filterschichtanordnung der eingangs genannten Art sowie ein Verfahren und eine Einrichtung zu deren Herstellung zu schaffen, bei denen sich die Verbindung der beiden Filterschichten wesentlich einfacher herstellen lässt und sowohl einen wesentlich geringeren technischen Aufwand als auch einen geringeren Zeitaufwand als bei den bekannten Herstellungsverfahren erfordert und die damit auch die Möglichkeit einer Einbeziehung des Verbindens der beiden Filterschichten in den automatischen Fertigungsprozess eröffnen.

Erfindungsgemäss wird das bei einer Filterschichtanordnung der eingangs genannten Art dadurch erreicht, dass als Mittel zur Verbindung der beiden Filterschichten eine Vielzahl von auf die Breite der Filterschichtanordnung verteilten Einzelfäden vorgesehen ist, die einander gegenüberliegende Punkte auf den beiden Grenzlinien miteinander verbinden und an diesen Punkten die Filterschichten im wesentlichen lotrecht zu deren Schichtfläche durchstossen und die an ihren beiden Enden mit ein Durchrutschen des Einzelfadens durch die Filterschichten verhindernden Halteorganen verbunden sind.

Der wesentliche Vorteil der vorliegenden Filterschichtanordnung gegenüber den bekannten Filterschichtanordnungen der eingangs genannten Art liegt im Prinzip darin, dass die Anbringung sämtlicher die beiden Filterschichten verbindender Einzelfäden sozusagen mit einem Stich (oder richtiger gesagt mit einer der Anzahl der Einzelfäden entsprechenden Zahl von gleichzeitig ausgeführten Stichen) zur gleichen Zeit erfolgen kann und daher nur eine sehr kurze Zeitspanne erfordert, während demgegenüber beispielsweise bei der oben erwähnten bekannten Filterschichtanordnung mit einer Naht als Verbindungsmittel zwischen den beiden Filterschichten die einzelnen Stiche der Naht zeitlich nacheinander erfolgen und demgemäss bei einer Anzahl von Stichen, die der Anzahl der Einzelfäden bei der vorliegenden Filterschichtanordnung entspricht, eine Zeitspanne für die Herstellung der Naht benötigt wird, die um einen dieser Anzahl entsprechenden Faktor grösser als die Zeitspanne zur Verbindung der beiden Filterschichten bei der vorliegenden Filterschichtanordnung ist. Ein weiterer entscheidender Vorteil bei der Herstellung der vorliegenden Filterschichtanordnung ist, dass die Einzelfäden mit den Halteorganen an ihren beiden Enden von marktüblichen, an sich zur Etikettenbefestigung vorgesehenen Befestigungsorganen gebildet sein können, für deren Anbringung es wiederum marktübliche Heftapparate gibt, die auch für die Anbringung der Einzelfäden bei der vorliegenden Filterschichtanordnung verwendbar sind und die auf dem Markt derart preisgünstig erhältlich sind, dass der Aufwand für eine der Anzahl der Einzelfäden bei der vorliegenden Filterschichtanordnung entsprechende Anzahl solcher Heftapparate noch wesentlich geringer als der Aufwand für eine zur Herstellung der besagten Naht bei der erwähnten bekannten Filterschichtanordnung geeignete « Nähmaschine » ist. Aus diesen beiden Hauptvorteilen ergibt sich, dass die vorliegende Filterschichtanordnung im Vergleich zu den bekannten Filterschichtanordnungen der eingangs genannten Art sowohl mit einem wesentlich geringeren technischen Aufwand bzw. Kostenaufwand als auch mit einem wesentlich geringeren Zeitaufwand hergestellt werden kann und somit insbesondere aufgrund des geringen erforderlichen Zeitaufwandes eine Einbeziehung des Verbindens der beiden die vorliegende Filterschichtanordnung bildenden Filterschichten in den automatischen Fertigungsprozess ermöglicht.

Bei einer bevorzugten Ausbildungsform der vorliegenden Filterschichtanordnung verlaufen die Einzelfäden jeweils von einer Aussenseite der Filterschichtanordnung durch die beiden miteinander verbundenen Filterschichten hindurch zur anderen Aussenseite der Filterschichtanordnung und sind an beiden Aussenseiten der Filterschichtanordnung mit Halteorganen verbunden. Zweckmässig sind die Einzelfäden dabei längs der Grenzlinien in gleichem Abstand voneinander angeordnet, vorzugsweise in einem Abstand von 5 bis 10 cm.

Bei einer weiteren, ebenfalls sehr vorteilhaften Ausbildungsform der vorliegenden Filterschichtanordnung verlaufen die Einzelfäden jeweils von einer Aussenseite der Filterschichtanordnung zunächst durch die beiden miteinander verbundenen Filterschichten hindurch zur anderen Aussenseite der Filterschichtanordnung und dann von dem Durchstosspunkt auf dieser anderen Aussenseite, vorzugsweise im wesentlichen parallel zu der Grenzlinie der betreffenden Filterschicht, zu einem anderen Durchstosspunkt auf dieser anderen Aussenseite und von dort wieder durch die beiden miteinander verbundenen Filterschichten hindurch zu der genannten einen Aussenseite der Filterschichtanordnung und sind demgemäss nur an dieser einen Aussenseite der Filterschichtanordnung mit Halteorganen verbunden. Zweckmässig können dabei die die beiden Grenzlinien miteinander verbindenden Einzelfadenabschnitte in gleichem Abstand voneinander längs der Grenzlinien angeordnet sein, vorzugsweise in einem Abstand zwischen 3 und 10 cm.

Vorteilhaft ist bei der vorliegenden Filterschichtanordnung jeder Einzelfaden mit beiden zugeordneten Halteorganen einstückig verbunden. Die Halteorgane jedes Einzelfadens können dabei zweckmässig aus an den beiden Enden des Einzelfadens quer zu diesem angeordneten und einstückig mit diesem verbundenen Querstäbchen aus dem gleichen Material wie dem des Fadens bestehen.

In bestimmten Fällen kann es bei der vorliegenden Filterschichtanordnung aber auch von Vorteil sein, wenn die Einzelfäden nur mit je einem der beiden zugeordneten Halteorgane einstückig verbunden sind. In diesem Fall ist zweckmässig jeder Einzelfaden an seinem einen Ende einstückig mit einem Halteorgan verbunden und an seinem anderen Ende mit einem in das andere dem Faden zugeordnete Halteorgan eingreifenden und sich dort bei Zugbelastung des Fadens verklemmenden oder verhakenden Kopfstück versehen. Eine solche Ausbildung der Einzelfäden mit nur einem einstückig mit dem Faden verbundenen Halteorgan kommt aber praktisch nur bei Filterschichtanordnungen in Betracht, die entsprechend der obengenannten bevorzugten Ausbildungsform der vorliegenden Filterschichtanordnung aufgebaut sind.

Bei der oben erwähnten weiteren vorteilhaften Ausbildungsform der vorliegenden Filterschichtanordnung kann es schliesslich auch von Vorteil sein, wenn jeder Einzelfaden an seinen beiden Enden mit je einem in das zugeordnete Halteorgan eingreifenden und sich dort bei Zugbelastung des Fadens verklemmenden oder verhakenden Kopfstück versehen ist.

Eine derartige Ausbildung der Einzelfäden ohne einstückig mit diesen verbundenen Halteorganen bzw. mit einstückig verbundenen Halteorganen jeweils nur an einem der beiden Fadenenden kommt insbesondere dann in Betracht, wenn im betrieblichen Einsatz die Zugbelastungen der einzelnen Fäden relativ gross sind und die Stabilität von einstückig mit den Faden verbundenen Halteorganen für diese Zugbelastung nicht mehr ausreicht. In diesem Zusammenhang ist zu beachten, dass bei einer Ausbildung der Einzelfäden mit einstückig verbundenen Halteorganen an beiden Fadenenden bei der obengenannten bevorzugten Ausbildungsform der vorliegenden Filterschichtanordnung je eines der beiden Halteorgane des Fadens und bei der obenerwähnten weiteren vorteilhaften Ausbildungsform der vorliegenden Filterschichtanordnung sogar alle beide einstückig mit dem Faden verbundenen Halteorgane durch die beiden Filterschichten hindurchgeführt werden müssen, und diese Notwendigkeit setzt natürlich der Stabilität dieser durch die Filterschichten hindurchzuführenden Halteorgane Grenzen. Demgegenüber können Halteorgane, in die ein Kopfstück des Fadens eingreift und die daher selbst nicht durch die Filterschichten hindurchgeführt werden müssen, natürlich wesentlich stabiler als durch die Filterschichten hindurchzuführende Halteorgane ausgebildet werden.

Vorteilhaft können die Einzelfäden und die zugeordneten Halteorgane bei der vorliegenden Filterschichtanordnung aus Kunststoff, vorzugsweise aus einem Polyamid bestehen. Besonders geeignet hierfür ist beispielsweise Nylon. Daher sollten insbesondere Einzelfäden mit einstückig verbundenen Querstäbchen an beiden Fadenenden zweckmässig aus Nylon oder einem anderen Kunststoff mit gleichen oder besseren Festigkeitseigenschaften bestehen. Ferner sollte bei Einzelfäden mit einstückig verbundenen Querstäbchen an beiden Fadenenden der Querschnitt der Querstäbchen zweckmässig ein Mehrfaches des Fadenquerschnittes betragen.

Die Erfindung betrifft weiter ein Verfahren zur Herstellung der vorliegenden Filterschichtanordnung, das dadurch gekennzeichnet ist, dass die die beiden Filterschichten der Filterschichtanordnung verbindenden Einzelfäden mit Heftapparaten angebracht werden. Mit besonderem Vorteil können dabei als Heftapparate marktübliche, an sich zur Etikettenbefestigung vorgesehene Heftapparate und als Einzelfäden die für diese Heftapparate vorgesehenen Heftfäden verwendet werden.

Eine zur Herstellung der obengenannten bevorzugten Ausbildungsform der vorliegenden Filterschichtanordnung geeignete erste vorteilhafte Ausführungsform des vorliegenden Verfahrens zeichnet sich dadurch aus, dass Einzelfäden verwendet werden, die mit mindestens einem der beiden als Halteorgane dienenden Querstäbchen biegsam verbunden sind, und zur Anbringung eines Einzelfadens zunächst eine Teil des Heftapparates bildende längsgeschlitzte Hohlnadel an der für die Anbringung des Einzelfadens vorgesehenen Stelle im wesentlichen lotrecht zur Schichtfläche der Filterschichten durch die beiden zu verbindenden, aufeinanderliegenden Filterschichten hindurchgestossen wird und danach in die Hohlnadel das mit dem Einzelfaden biegsam verbundene Querstäbchen derart eingeführt wird, dass der Ansatz des Einzelfadens an dem Querstäbchen innerhalb des Längsschlitzes der Hohlnadel liegt, und dass anschliessend das Querstäbchen durch die Hohlnadel und damit durch die beiden von derselben durchstossenen Filterschichten hindurchgeschoben wird, wobei der mit dem Querstäbchen biegsam verbundene Einzelfaden von dem Querstäbchen mit durch die Filterschichten hindurchgezogen und dabei an seiner Ansatzstelle am Querstäbchen während des Hindurchziehens in Längsrichtung der Hohlnadel umgebogen wird und wobei sich das Querstäbchen nach dem Hindurchschieben durch die Hohlnadel wieder quer zu dem mit durch die Filterschichten hindurchgezogenen Einzelfaden zu stellen beginnt, und dass schliesslich die Hohlnadel rückwärts aus den Filterschichten herausgezogen wird, wobei das Querstäbchen ein gleichzeitiges Herausziehen des durch die Filterschichten hindurchgezogenen Einzelfadens verhindert.

Zur Herstellung der obenerwähnten weiteren vorteilhaften Ausbildungsform der vorliegenden Filterschichtanordnung ist eine zweite Ausführungsform des vorliegenden Verfahrens von Vorteil, die sich dadurch auszeichnet, dass Einzelfäden verwendet werden, die mit beiden als Halteorgane dienenden Querstäbchen biegsam verbunden sind, und zur Anbringung eines Einzelfadens zunächst zwei Teile der Heftapparate bildende längsgeschlitzte Hohlnadeln an den beiden Durchstosspunkten im wesentlichen lotrecht zur Schichtfläche der Filterschichten durch die beiden zu verbindenden, aufeinanderliegenden Filterschichten hindurchgestossen werden und danach in die beiden Hohlnadeln je eines der beiden mit den beiden Enden des Einzelfadens biegsam verbundenen Querstäbchen derart eingeführt wird, dass der Ansatz des Einzelfadens an dem Querstäbchen innerhalb des Längsschlitzes der betreffenden Hohlnadel liegt, und dass anschliessend die beiden Querstäbchen durch die Hohlnadeln und damit durch die beiden von denselben durchstossenen Filterschichten hindurchgeschoben werden, wobei jedes der beiden mit je einem Querstäbchen biegsam verbundenen Einzelfadenenden von dem betreffenden Querstäbchen mit durch die Filterschichten hindurchgezogen und dabei an seiner Ansatzstelle an dem betreffenden Querstäbchen während des Hindurchziehens in Längsrichtung der betreffenden Hohlnadel umgebogen wird und wobei sich jedes der beiden Querstäbchen nach dem Hindurchschieben durch die Hohlnadel wieder quer zu dem von ihm mit durch die Filterschichten hindurchgezogenen Einzelfadenende zu stellen beginnt, und dass schliesslich die beiden Hohlnadeln rückwärts aus den Filterschichten herausgezogen werden, wobei die beiden Querstäbchen ein gleichzeitiges Herausziehen der durch die Filterschichten hindurchgezogenen beiden Einzelfadenenden verhindern.

Mit besonderem Vorteil können bei dem vorliegenden Verfahren sämtliche die beiden Filterschichten der Filterschichtanordnung verbindenden Einzelfäden gleichzeitig angebracht werden. Dadurch wird der oben schon mehrfach erwähnte Vorteil der beträchtlichen Zeitersparnis bei der Herstellung der vorliegenden Filterschichtanordnung im Vergleich zu dem erforderlichen Zeitaufwand für die Herstellung der bekannten Filterschichtanordnungen der eingangs genannten Art erreicht.

Die Erfindung betrifft ferner noch eine Einrichtung zur Durchführung des vorliegenden Verfahrens, die gekennzeichnet ist durch eine Heftmaschine mit einer der Anzahl der Fadenverbindungen zwischen den beiden Filterschichten der Filterschichtanordnung entsprechenden Anzahl von Heftapparaten sowie Mitteln zur gleichzeitigen Betätigung aller dieser Heftapparate.

Die Anzahl der Heftapparate entspricht dabei bei einer Einrichtung zur Durchführung der obengenannten ersten vorteilhaften Ausführungsform des vorliegenden Verfahrens der Anzahl der zur Verbindung der beiden Filterschichten der Filterschichtanordnung anzubringenden, je eine Fadenverbindung zwischen den beiden Filterschichten herstellenden Einzelfäden und bei einer Einrichtung zur Durchführung der ebenfalls oben erwähnten zweiten Ausführungsform des vorliegenden Verfahrens dem Doppelten der Anzahl der zur Verbindung der beiden Filterschichten der Filterschichtanordnung anzubringenden, je zwei Fadenverbindungen zwischen den beiden Filterschichten herstellenden Einzelfäden.

Zur Einbeziehung der Herstellung der vorliegenden Filterschichtanordnung in den automatischen Fertigungsprozess von Filterschichten kann die Einrichtung zur Durchführung des vorliegenden Verfahrens zweckmässig und mit besonderem Vorteil an einer Filterschichtenstrasse oder genauer gesagt im Endbereich einer Filterschichtenstrasse angeordnet und mit Wende- und Richtmitteln versehen sein, die von den von der Filterschichtenstrasse angelieferten Filterschichten jede zweite umwenden und die jeweils nachfolgende oder die jeweils vorangehende nicht umgewendete Filterschicht auf diese umgewendete Filterschicht transportieren und die beiden aufeinanderliegenden Filterschichten derart aufeinander ausrichten, dass sie sich gegenseitig vollständig bedecken, und in diesem Zustand der Heftung zuführen und die zwischen einem die fertig zugeschnittenen Filterschichten einzeln nacheinander anliefernden Ausgang der Filterschichtenstrasse und der Heftmaschine angeordnet sind.

Anhand der nachstehenden Figuren ist die Erfindung im folgenden anhand einiger Ausführungsbeispiele der vorliegenden Filterschichtanordnung sowie der Einrichtung zur Durchführung des Herstellungsverfahrens näher erläutert. Es zeigen

Figur 1   eine perspektivische Teilansicht eines der obengenannten bevorzugten Ausbildungsform entsprechenden ersten Ausführungsbeispiels einer Filterschichtanordnung nach der Erfindung,

Figur 2   einen Teilschnitt durch eine Filterschichtanordnung wie in Fig. 1 in der Ebene der die beiden Filterschichten verbindenden Einzelfäden, wobei der Abstand der die beiden Filterschichten verbindenden Einzelfäden im richtigen Verhältnis zu ihrer Länge und der Grösse ihrer Halteorgane sowie der Dicke und dem Abstand der Filterschichten dargestellt ist,

Figur 3   eine perspektivische Teilansicht eines der obengenannten weiteren vorteilhaften Ausbildungsform entsprechenden zweiten Ausführungsbeispiels einer Filterschichtanordnung nach der Erfindung,

Figur 4   einen Teilschnitt durch eine Filterschichtanordnung wie in Fig. 3 in der Ebene der die beiden Filterschichten verbindenden Einzelfäden, wobei der Abstand der die beiden Filterschichten verbindenden Einzelfäden im richtigen Verhältnis zu ihrer Länge und der Grösse ihrer Halteorgane sowie der Dicke und dem Abstand der Filterschichten dargestellt ist,

Figur 5   eine schematische Darstellung einer am Ende einer Filterschichtenstrasse angeordneten Einrichtung zur automatischen Herstellung von Filterschichtanordnungen nach der Erfindung,

Figur 6   eine Seitenansicht einer für die in Fig. 5 gezeigte automatische Herstellungseinrichtung geeigneten Heftmaschine.

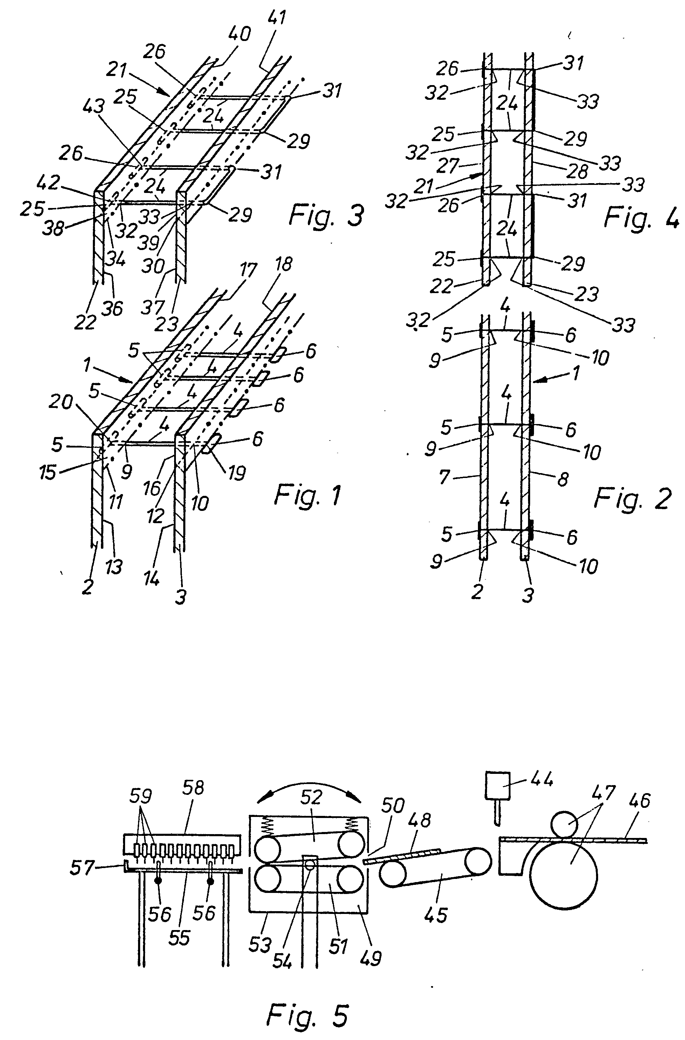

Bei der in den Figuren 1 und 2 gezeigten Filterschichtanordnung 1 sind die zwei gesonderten, zur Bedeckung von je einer Filterplatte vorgesehenen, im wesentlichen rechteckigen Filterschichten 2 und 3 durch eine Vielzahl von Einzelfäden 4 verbunden, von denen jeder an seinen beiden Enden mit je einem Halteorgan 5 bzw. 6 versehen ist. Die Einzelfäden 4 haben eine Fadenlänge von 20 mm oder von 25 mm und einen Fadendurchmesser von mehr als 0,3 mm sowie eine zwischen 2 und 3 kg liegende Grenzbelastbarkeit und bestehen ebenso wie die einstückig mit ihnen verbundenen Halteorgane 5 und 6 aus Nylon. Jeder Einzelfaden 4 verläuft bei der in den Figuren 1 und 2 gezeigten Filterschichtänordnung 1 von der einen Aussenseite 7 der Filterschichtanordnung 1 durch die beiden miteinander verbundenen Filterschichten 2 und 3 hindurch zu der anderen Aussenseite 8 der Filterschichtanordnung 1 und ist an den beiden Aussenseiten 7 und 8 der Filterschichtanordnung 1 mit je einem der beiden einstückig mit ihm verbundenen Halteorgane 5 und 6 versehen. An den Halteorganen 5 und 6 stützen sich die Filterschichten 2 und 3 beim Ueberhängen der Filterschichtanordnung 1 über eine Filterplatte bzw. einen Filterrahmen ab. Die Halteorgane 5 und 6 jedes Einzelfadens 4 bestehen aus an den beiden Enden des Fadens quer zu diesem angeordneten und einstückig mit diesem verbundenen Querstäbchen, von denen das eine 5 einen kreisförmigen Querschnitt hat und biegsam mit dem Einzelfaden 4 verbunden ist und von denen das andere 6 einen im wesentlichen rechteckigen Querschnitt hat und durch eine Fadenverdickung im Verbindungsbereich mit dem Einzelfaden 4 im wesentlichen starr mit demselben verbunden ist. Die Einzelfäden 4 sind bei der in den Figuren 1 und 2 gezeigten Filterschichtanordnung 1 so angeordnet, dass sie einander gegenüberliegende Punkte 9 und 10 auf den beiden Grenzlinien 11 und 12, welche jeweils zwischen dem zur Bedeckung einer Filterplatte vorgesehenen Bereich 13 bzw. 14 der Filterschicht 2 bzw. 3 und der nicht zu diesem Bereich gehörenden Randzone 15 bzw. 16 der Filterschicht 2 bzw. 3 liegen, miteinander verbinden und an diesen Punkten 9 bzw. 10 die Filterschichten 2 bzw. 3 im wesentlichen lotrecht zu deren Schichtfläche durchstossen. Die Breite der Randzonen 15 und 16 ist bei beiden Filterschichten 2 und 3 gleichgross und liegt im Bereich zwischen 0,5 und 3 cm. Demgemäss verlaufen die Grenzlinien 11 und 12 in einem zwischen 0,5 und 3 cm liegenden Abstand parallel zu der oberen Kante 17 bzw. 18 der jeweils zugeordneten Filterschicht 2 bzw. 3. Die Abstände der jeweils benachbarten Einzelfäden 4 voneinander liegen zwischen 5 und 10 cm und sind gleichgross.

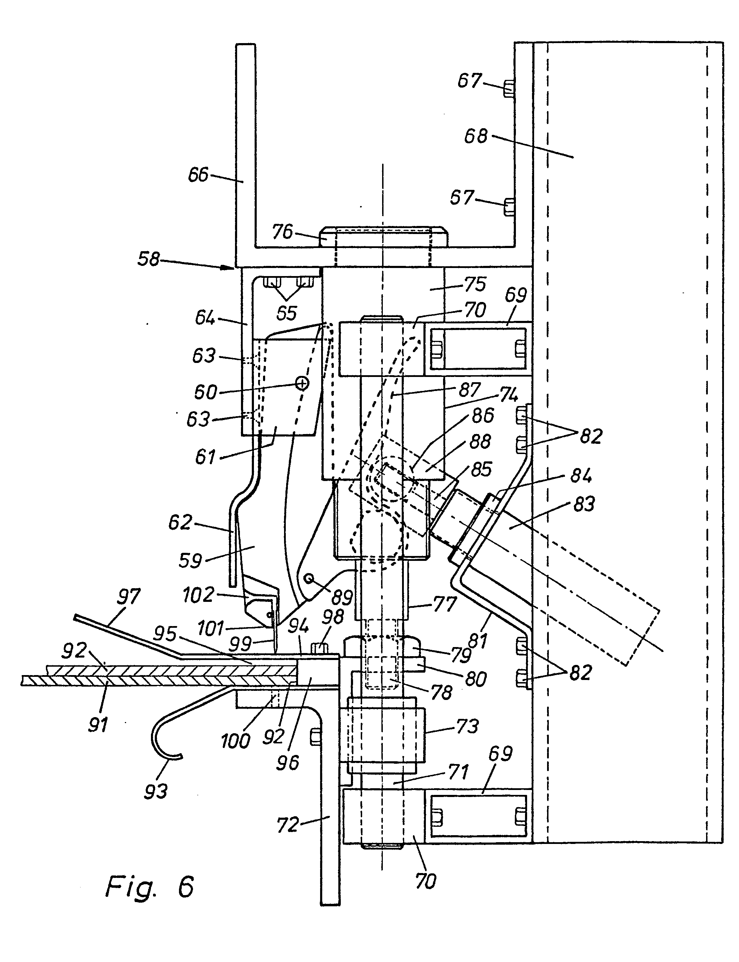

Bei der Herstellung der in den Figuren 1 und 2 gezeigten Filterschichtanordnung 1 werden die die beiden Filterschichten 2 und 3 verbindenden Einzelfäden 4 zweckmässig mit Heftapparaten angebracht. Als Heftapparate können dabei marktübliche, an sich zur Etikettenbefestigung vorgesehene Heftapparate und als Einzelfäden 4 einschliesslich der einstückig mit diesen verbundenen Halteorgane 5 und 6 die für diese marktüblichen Heftapparate vorgesehenen Heftfäden verwendet werden. Derartige zur Etikettenbefestigung vorgesehene Heftapparate sowie die zugehörigen Heftfäden sind beispielsweise aus den CH-A-559.606 und CH-A-565.017 sowie den US-A-3.103.666, US-A-3.759.435, US-A-3.797.722 und US-A-3.659.769 bekannt. Bei den für diese marktüblichen Heftapparate vorgesehenen Heftfäden ist eines der beiden als Halteorgane dienenden Querstäbchen, nämlich das Querstäbchen 5 in den Figuren 1 und 2, biegsam mit dem Einzelfaden verbunden; die Anbringung eines Einzelfadens 4 mittels eines solchen marktüblichen Heftapparates erfolgt so, dass zunächst eine Teil des Heftapparates bildende längsgeschlitzte Hohlnadel (99 in Fig. 6) an der für die Anbringung eines Einzelfadens 4 vorgesehenen Stelle, also z. B. dem Punkt 19 in Fig. 1, im wesentlichen lotrecht zur Schichtfläche der Filterschichten 2 und 3 durch die beiden zu verbindenden, aufeinanderliegenden Filterschichten 2 und 3 hindurchgestossen wird und danach — durch Betätigung eines entsprechenden Betätigungsorganes des Heftapparates — in die Hohlnadel das mit dem Einzelfaden 4 biegsam verbundene Querstäbchen 5 derart eingeführt wird, dass die Ansatzstelle 20 des Einzelfadens 4 an dem Querstäbchen 5 innerhalb des Längsschlitzes der Hohlnadel liegt, und anschliessend das Querstäbchen 5 durch die Hohlnadel und damit durch die beiden von derselben durchstossenen Filterschichten 2 und 3 hindurchgeschoben wird, wobei der mit dem Querstäbchen 5 biegsam verbundene Einzelfaden 4 von dem Querstäbchen 5 mit durch die Filterschichten 2 und 3 hindurchgezogen und dabei an seiner Ansatzstelle 20 am Querstäbchen 5 während des Hindurchziehens in Längsrichtung der Hohlnadel umgebogen wird und wobei sich das Querstäbchen 5 nach dem Hindurchschieben durch die Hohlnadel wieder quer zu dem mit durch die Filterschichten hindurchgezogenen Einzelfaden 4 zu stellen beginnt; schliesslich wird dann — durch Zurückziehen des Heftapparates — die Hohlnadel rückwärts aus den Filterschichten 2 und 3 herausgezogen, wobei das Querstäbchen 5 ein gleichzeitiges Herausziehen des durch die Filterschichten 2 und 3 hindurchgezogenen Einzelfadens 4 verhindert. Zu bemerken ist hierzu noch, dass bei den oben erwähnten bekannten, an sich zur Etikettenbefestigung vorgesehenen Heftapparaten eine Vielzahl von beidseitig mit Halteorganen versehenen Heftfäden zu einem Heftfadenmagazin (dessen Ausbildung z. B. aus den Figuren 26 und 27 der obengenannten CH-A-559.606 und CH-A-565.017 ersichtlich ist) zusammengefasst ist und dieses Heftfadenmagazin in einem Zuführungsschlitz 102 in Fig. 6 des Heftapparates steckt und bei jeder Betätigung des Heftapparates um einen Schritt vorrückt, so dass also unmittelbar nach der Betätigung des Heftapparates und damit der Anbringung eines Heftfadens wieder ein neuer Heftfaden bzw. das Querstäbchen desselben vor das hintere Ende der Hohlnadel gerückt wird und der Heftapparat damit bereits bei dem oben erwähnten Zurückziehen der Hohlnadel aus den Filterschichten 2 und 3 für die Anbringung des nächsten Heftfadens vorbereitet ist.

Bei der in den Figuren 3 und 4 gezeigten Filterschichtanordnung 21 sind die zwei gesonderten, zur Bedeckung von je einer Filterplattenseite vorgesehenen Filterschichten 22 und 23 ebenfalls durch eine Vielzahl von Einzelfäden 24 verbunden, von denen jeder an seinen beiden Enden mit je einem Halteorgan 25 bzw. 26 versehen ist, jedoch verläuft hier jeder Einzelfaden 24 von der einen Aussenseite 27 der Filterschichtanordnung 21 zunächst durch die beiden miteinander verbundenen Filterschichten 22 und 23 hindurch zur anderen Aussenseite 28 der Filterschichtanordnung 21 und dann von dem Durchstosspunkt 29 auf dieser anderen Aussenseite 28 im wesentlichen parallel zu der Grenzlinie 30 der betreffenden Filterschicht 23 zu einem anderen Durchstosspunkt 31 auf dieser anderen Aussenseite 28 und von dort wieder durch die beiden miteinander verbundenen Filterschichten 23 und 22 hindurch zu der genannten einen Aussenseite 27 der Filterschichtanordnung 21, und demgemäss weist jeder Einzelfaden 24 bei dieser in den Figuren 3 und 4 gezeigten Filterschichtanordnung 21 auch nur an dieser einen Aussenseite 28 der Filterschichtanordnung 21 Halteorgane 25 und 26 auf. Diese Ausbildung mit im wesentlichen U-förmigem Verlauf der Einzelfäden 24 hat gegenüber dem geradlinigen Verlauf der Einzelfäden 4 bei der in den Figuren 1 und 2 gezeigten Filterschichtanordnung 1 den Vorteil, dass für die verschiedenartigsten Filterschichtanordnungen immer mit ein und derselben Fadenlänge der Einzelfäden 24 gearbeitet werden kann, was bei den geradlinig verlaufenden Einzelfäden 4 der Filterschichtanordnung 1 nicht der Fall ist ; denn da der Abstand der Innenseiten der beiden Filterschichten 2 und 3 der Filterschichtanordnung 1 bzw. der Filterschichten 22 und 23 der Filterschichtanordnung 21 durch die Dicke der Filterplatte, für die die Filterschichtanordnung 1 bzw. 21 vorgesehen ist, fest vorgegeben ist, muss bei der Filterschichtanordnung 1 bei Variation der Dicke der Filterschichten 2 und 3 die Länge der Einzelfäden 4 entsprechend angepasst werden, während im gleichen Fall bei der Filterschichtanordnung 21 nur der Abstand der Durchstosspunkte 29 und 31 entsprechend angepasst werden muss, die Länge der Einzelfäden 24 jedoch unverändert bleiben kann. Ebenso wäre natürlich auch bei unterschiedlichen Dicken der Filterplatte, für die die Filterschichtanordnung 1 bzw. 21 vorgesehen ist, bei der Filterschichtanordnung 1 die Länge der Einzelfäden 4 entsprechend anzupassen, während bei der Filterschichtanordnung 21 solche unterschiedlichen Filterplattendicken ebenfalls durch Anpassung des Abstandes der Durchstosspunkte 29 und 31 ausgeglichen werden können. Die Frage der Anpassbarkeit an unterschiedliche Filterschichtdicken und/oder Filterplattendicken spielt insofern eine wesentliche Rolle, als die für die marktüblichen Heftapparate vorgesehenen Heftfäden nur in bestimmten Längenabstufungen auf dem Markt erhältlich sind und eine Anpassung der Länge der Einzelfäden 4 daher auch nur in diesen groben Stufen erfolgen könnte, wenn auf dem Markt erhältliche Heftfäden verwendet werden sollen, während bei einer genaueren Anpassung der Länge der Einzelfäden 4 an die für die Filterschichtanordnung gegebenen Verhältnisse Sonderanfertigungen von Heftfäden verwendet werden müssten, was erstens die Kosten für die Heftfäden beträchtlich erhöhen würde und zweitens auch produktionstechnisch mit Schwierigkeiten verbunden wäre, da bei jeder neuen Serie von herzustellenden Filterschichtanordnungen die Heftfadenmagazine bei allen Heftapparaten gegen solche mit der der Serie entsprechender Einzelfadenlänge ausgewechselt werden müssten und ausserdem auch eine grosse Lagerhaltung von Heftfadenmagazinen mit den verschiedenen Einzelfadenlängen notwendig wäre. Zwar wäre für die bei der Filterschichtanordnung 21 vorgesehenen Heftfäden 24 auch eine Sonderanfertigung erforderlich, weil Heftfäden in dieser Ausführung mit biegsam mit dem Faden verbundenen Querstäbchen an beiden Fadenenden und insbesondere auch von der erforderlichen, zwischen 60 und 140 mm liegenden Fadenlänge auf dem Markt ebenfalls nicht erhältlich sind, jedoch könnte man sich bei einer solchen Sonderanfertigung, wie schon gesagt, auf eine einzige Fadenlänge von beispielsweise 100 mm beschränken, und diese Sonderanfertigung würde insofern nicht mit allzu grossen Mehrkosten verbunden sein, als diese eine Sonderanfertigung ja für alle verschiedenen herzustellenden Filterschichtanordnungen verwendbar wäre und dementsprechend die erforderlichen Stückzahlen wesentlich grösser als bei den oben erwähnten Sonderanfertigungen für die Einzelfäden 4 mit relativ fein abgestuften Fadenlängen wären. Ein weiterer Vorteil der Einzelfäden 24 gegenüber den Einzelfäden 4 wäre schliesslich auch noch, dass das zwischen den Durchstosspunkten 29 und 31 liegende Fadenstück des Einzelfadens 24 wesentlich weniger aufträgt als das relativ kompakte, bei den marktüblichen Heftfäden immerhin eine Grösse von ca. 8 × 2,5 mm aufweisende Querstäbchen 6 des Einzelfadens 4 ; dies ist insofern ein Vorteil, als unter Umständen beim Zusammenschieben der einzelnen Filterplatten der Filterpresse einige der Fadenstücke zwischen den Durchstosspunkten 29 und 31 bzw. einige der Querstäbchen 6 und natürlich auch einige der Querstäbchen 25 und 26 zwischen die Pressränder bzw. die äusseren Bereiche derselben kommen können und daher anzustreben ist, dass diese zwischen die Pressränder gelangenden Teile der Heftfäden möglichst wenig auftragen.

Bei der in den Figuren 3 und 4 gezeigten Filterschichtanordnung 21 stützen sich die Filterschichten 22 und 23 beim Ueberhängen der Filterschichtanordnung 21 über eine Filterplatte bzw. einen Filterrahmen an den Halteorganen 25 und 26 sowie den zwischen den Durchstosspunkten 29 und 31 liegenden Fadenstücken der Einzelfäden 24 ab. Die Halteorgane 25 und 26 jedes Einzelfadens 24 bestehen aus an den beiden Enden des Fadens quer zu diesem angeordneten und einstückig mit diesem verbundenen Querstäbchen von kreisförmigem Querschnitt, die biegsam mit dem Einzelfaden 24 verbunden sind. Die Einzelfäden 24 sind bei der in den Figuren 3 und 4 gezeigten Filterschichtanordnung 21 — ebenso wie die Einzelfäden 4 bei der in den Figuren 1 und 2 gezeigten Filterschichtanordnung 1 — so angeordnet, dass sie einander gegenüberliegende Punkte 32 und 33 auf den beiden Grenzlinien 34 und 30, welche jeweils zwischen dem zur Bedeckung einer Filterplatte vorgesehenen Bereich 36 bzw. 37 der Filterschicht 22 bzw. 23 und der nicht zu diesem Bereich gehörenden Randzone 38 bzw. 39 der Filterschicht 22 bzw. 23 liegen, miteinander verbinden und an diesen Punkten 32 bzw. 33 die Filterschichten 22 bzw. 23 im wesentlichen lotrecht zu deren Schichtfläche durchstossen. Die Breite der Randzonen 38 und 39 ist bei beiden Filterschichten 22 und 23 gleich gross und liegt im Bereich zwischen 0,5 und 3 cm. Demgemäss verlaufen die Grenzlinien 30 und 34 in einem zwischen 0,5 und 3 cm liegenden Abstand parallel zu der oberen Kante 40 bzw. 41 der jeweils zugeordneten Filterschicht 22 bzw. 23. Die Abstände der jeweils benachbarten, die Grenzlinien 30 und 34 verbindenden Fadenstücke der Einzelfäden 24 voneinander liegen zwischen 3 und 10 cm und sind gleichgross.

Auch bei der Herstellung der in den Figuren 3 und 4 gezeigten Filterschichtanordnung 21 werden die die beiden Filterschichten 22 und 23 verbindenden Einzelfäden 24 zweckmässig mit Heftapparaten abgebracht. Als Heftapparate können dabei die gleichen marktüblichen, an sich zur Etikettenbefestigung vorgesehenen Heftapparate wie bei der Herstellung der in den Figuren 1 und 2 gezeigten Filterschichtanordnung 1 verwendet werden ; als Einzelfäden 24 wären hingegen — wie oben schon erwähnt — Sonderanfertigungen erforderlich, die an beiden Fadenenden mit den gleichen Halteorganen 25 und 26 versehen sind, mit denen die für die marktüblichen Heftapparate vorgesehenen Heftfäden (in Form des mit dem Einzelfaden 4 einstückig und biegsam verbundenen Querstäbchen 5 in Fig. 1) an nur je einem Fadenende versehen sind, und die ausserdem, wie aus einem Vergleich der Figuren 3 und 4 mit den Figuren 1 und 2 hervorgeht, eine wesentlich grössere Fadenlänge als die marktüblichen Heftfäden aufweisen müssten. Für die Anbringung eines Einzelfadens 24 sind zwei der genannten marktüblichen Heftapparate erforderlich, die nebeneinander so angeordnet sind, dass der Abstand ihrer beiden längsgeschlitzten Hohlnadeln dem Abstand der Durchstosspunkte 29 und 31 entspricht, und die zur Anbringung des Fadens 24 gleichzeitig betätigt werden. Dabei werden gleichzeitig von dem einen dieser beiden Heftapparate das Querstäbchen 25 mit dem einen Fadenende des Einzelfadens 24 und von dem anderen der beiden Heftapparate das Querstäbchen 26 mit dem anderen Fadenende des Einzelfadens 24 durch die beiden Filterschichten 22 und 23 hindurchgestossen. Dementsprechend ist vor der Anbringung eines Einzelfadens 24 das Querstäbchen 25 mit dem einen Fadenende des Einzelfadens 24 vor der Hohlnadel des einen der beiden Heftapparate und das Querstäbchen 26 mit dem anderen Fadenende des Einzelfadens 24 vor der Hohlnadel des anderen der beiden Heftapparate zu plazieren ; die Anbringung des Einzelfadens 24 erfolgt dann so, dass zunächst die zwei längsgeschlitzten Hohlnadeln der beiden Heftapparate an den beiden Durchstosspunkgen 29 und 31 im wesentlichen lotrecht zur Schichtfläche der Filterschichten 22 und 23 durch die beiden zu verbindenden, aufeinanderliegenden Filterschichten 22 und 23 hindurchgestossen werden und danach in die beiden Hohlnadeln je eines der beiden mit den beiden Enden des Einzelfadens 24 biegsam verbundenen Querstäbchen 25 und 26 derart eingeführt wird, dass die Ansatzstelle 42 bzw. 43 des Einzelfadens 24 an den Querstäbchen 25 bzw. 26 innerhalb des Längsschlitzes der betreffenden Hohlnadel liegt und anschliessend die beiden Querstäbchen 25 und 26 durch die Hohlnadeln und damit durch die beiden von denselben durchstossenen Filterschichten 22 und 23 hindurchgeschoben werden, wobei jedes der beiden mit je einem Querstäbchen 25 bzw. 26 biegsam verbundenen Einzelfadenenden von dem betreffenden Querstäbchen 25 bzw. 26 mit durch die Filterschichten 22 und 23 hindurchgezogen und dabei an seiner Ansatzstelle 42 bzw. 43 an dem betreffenden Querstäbchen 25 bzw. 26 während des Hindurchziehens in Längsrichtung der betreffenden Hohlnadel umgebogen wird und wobei sich jedes der beiden Querstäbchen 25 bzw. 26 nach dem Hindurchschieben durch die Hohlnadel wieder quer zu dem von ihm mit durch die Filterschichten 22 und 23 hindurchgezogenen Einzelfadenende zu stellen beginnt, und dass schliesslich die beiden Hohlnadeln rückwärts aus den Filterschichten 22 und 23 herausgezogen werden, wobei die beiden Querstäbchen 25 und 26 ein gleichzeitiges Herausziehen der durch die Filterschichten 22 und 23 hindurchgezogenen beiden Einzelfadenenden verhindern. Natürlich wird auch hierbei ein Heftfadenmagazin mit einer Vielzahl von beidseitig mit Querstäbchen 25 und 26 versehenen Einzelfäden 24 verwendet (die Ausbildung eines solchen Heftfadenmagazins ergibt sich aus den Figuren 26 und 27 der schon oben erwähnten CH-A-559.606 und CH-A-565.017, wenn man die obere Hälfte dieser Figuren 26 und 27 weglässt und durch eine spiegelbildliche Anordnung der unteren Hälfte dieser Figuren ersetzt). Dieses Heftfadenmagazin ist mit den Querstäbchen an den einen Fadenenden der Heftfäden in den Zuführungsschlitz des einen der beiden genannten Heftapparate und mit den Querstäbchen an den anderen Fadenenden der Heftfäden in den Zuführungsschlitz des anderen der beiden genannten Heftapparate zu stecken, so dass also die beiden zur Anbringung eines Einzelfadens 24 dienenden Heftapparate sozusagen durch das Heftmagazin bzw. die Einzelfäden desselben miteinander verbunden sind. Ebenso wie oben im Zusammenhang mit den Figuren 1 und 2 beschrieben rückt auch im vorliegenden Fall das in den Zuführungsschlitzen der beiden Heftapparate steckende Heftfadenmagazin bei jeder Betätigung der beiden Heftapparate um einen Schritt vor, so dass also unmittelbar nach der Betätigung derselben und damit unmittelbar nach Anbringung eines Einzelfadens 24 wieder ein neuer Einzelfaden 24 bzw. die beiden Querstäbchen 25 und 26 desselben vor die hinteren Enden der beiden Hohlnadeln gerückt werden und die beiden Heftapparate damit bereits bei dem oben erwähnten Zurückziehen der beiden Hohlnadeln aus den Filterschichten 22 und 23 wieder für die Anbringung des nächsten Einzelfadens 24 vorbereitet sind.

Zu erwähnen ist zu dem vorliegenden Verfahren allgemein noch, dass in der Regel mittels einer eine entsprechende Anzahl von Heftapparaten umfassenden Einrichtung sämtliche die beiden Filterschichten 2 und 3 bzw. 22 und 23 der Filterschichtanordnung 1 bzw. 21 verbindenden Einzelfäden 4 bzw. 24 gleichzeitig angebracht werden, denn darauf beruht ja einer der wesentlichen Vorteile des vorliegenden Verfahrens gegenüber den bekannten Verfahren zur Herstellung von Filterschichtanordnungen der eingangs genannten Art, nämlich die beträchtliche Zeitersparnis. Bei Verwendung einer solchen Einrichtung bereitet auch die für die Filterschichtanordnung nach den Figuren 3 und 4 erforderliche gleichzeitige Betätigung von zwei Heftapparaten zur Anbringung jedes Einzelfadens 24 keinerlei Schwierigkeiten, weil bei einer solchen Einrichtung alle Betätigungs- und Bewegungsvorgänge maschinell erfolgen und daher ohne Schwierigkeiten simultan durchgeführt werden können. Demgegenüber wäre bei der prinzipiell ebenfalls gegebenen Möglichkeit, die die beiden Filterschichten der Filterschichtanordnung verbindenden Einzelfäden einzeln nacheinander von Hand anzubringen, die Herstellung von Filterschichtanordnungen nach den Fig. 3 und 4 wegen der erforderlichen gleichzeitigen Betätigung von zwei Heftapparaten doch relativ schwierig, so dass für eine solche Einzelanbringung der Heftfäden in erster Linie eine Verbindung wie in den Figuren 1 und 2 in Betracht käme.

Die Fig. 5 zeigt schematisch den Aufbau einer solchen am Ende einer Filterschichtenstrasse angeordneten Einrichtung zur gleichzeitigen Anbringung sämtlicher die beiden Filterschichten einer Filterschichtanordnung verbindenden Einzelfäden sowie der notwendigen Zusatzaggregate, um die von der Filterschichtenstrasse angelieferten einzelnen Filterschichten automatisch und im Takt ihrer Anlieferung zu Filterschichtanordnungen nach der Erfindung verbinden zu können. Das Ende der Filterschichtenstrasse wird durch die schematisch dargestellte Querschneideeinrichtung 44 und das sich anschliessende, ebenfalls schematisch dargestellte Transportband 45 repräsentiert. Die in der Filterschichtenstrasse hergestellte Filterschichtbahn 46 bewegt sich im wesentlichen kontinuierlich auf das Transportband 45 zu und wird von der Längsschneideeinrichtung 47 sowie der Querschneideeinrichtung 44 auf die gewünschten Abmasse der herzustellenden Filterschichten zugeschnitten. Jeweils nach der Betätigung der Querschneideeinrichtung 44 fällt eine fertig zugeschnittene Filterschicht 48 auf das Transportband 45, das diese Filterschicht 48 der Wendeeinrichtung 49 zuführt. Die Wendeeinrichtung 49 ist deswegen erforderlich, weil bei Filterschichtanordnungen der vorliegenden Art die der Filterplatte zugewandten Innenseiten der beiden die Filterschichtanordnung 1 bzw. 21 bildenden Filterschichten 2 und 3 bzw. 22 und 23 von denjenigen Seiten der beiden Filterschichten gebildet sein sollen, die bei der Herstellung dieser Filterschichten auf der Unterseite der Filterschichtbahn 46 gelegen waren, weil die Oberseite der Filterschichtbahn 46 im Vergleich zu ihrer Unterseite relativ uneben ist und die Filterschichten mit ihrer ebenen oder richtiger gesagt ebeneren Seite auf der Filterplatte aufliegen sollen. Da nun bei den vom Transportband 45 angelieferten Filterschichten 48 die ebene Seite immer die untere Seite ist, muss die Wendeeinrichtung 49 von den von der Filterschichtenstrasse angelieferten Filterschichten 48 jede zweite umwenden und die jeweils nachfolgende, nicht umgewendete Filterschicht auf diese umgewendete Filterschicht transportieren. Das geschieht bei der Wendeeinrichtung 49 dadurch, dass die am Schlitz 50 in die Wendeeinrichtung eingeführte Filterschicht 48 zunächst von den beiden Transportbändern 51 und 52 erfasst und vollständig in die Wendeeinrichtung 49 hereingezogen wird und dann die Transportbänder 51 und 52 gestoppt werden und das die Transportbänder 51 und 52 aufnehmende Gehäuse 53 der Wendeeinrichtung 49 anschliessend um 180° um die Achse 54 gedreht wird. Während dieser Drehung wird die zwischen den Transportbändern 51 und 52 befinaliche Filterschicht durch das federnd im Gehäuse 53 gelagerte Transportband 52 gegen das fest im Gehäuse 53 gelagerte Transportband 51 gedrückt, so dass die Filterschicht während der Drehung nicht aus dem Gehäuse 53 herausrutschen kann. Nach vollendeter Drehung werden dann die Transportbänder 51 und 52 in Bewegung gesetzt, wodurch die nunmehr umgewendete Filterschicht durch den Schlitz 50 aus der Wendeeinrichtung 49 herausgeschoben wird und auf den Richttisch 55 fällt. Die ebene Seite dieser auf dem Richttisch 55 befindlichen Filterschicht ist nunmehr oben, und auf diese Filterschicht wird nunmehr eine zweite Filterschicht mit der ebenen Seite nach unten transportiert.Hierzu wird die nächste vom Transportband 45 gelieferte Filterschicht einfach durch die Wendeeinrichtung 49 hindurchlaufen gelassen, ohne dass sich dabei das Gehäuse 53 der Wendeeinrichtung 49 um 180° dreht. Die mit der ebenen Seite nach unten in die Wendeeinrichtung eingeführte Filterschicht kommt daher auch mit der ebenen Seite nach unten wieder aus der Wendeeinrichtung 49 heraus und fällt dann auf die auf dem Richttisch 55 bereits liegende Filterschicht, deren ebene Seite nach oben gewandt ist. Anschliessend werden die beiden auf dem Richttisch 55 aufeinanderliegenden Filterschichten durch Richtmittel 56 an eine nicht dargestellte, zu der Heftmaschine 58 gehörende Längskante (92 in Fig. 6) und durch weitere nicht dargestellte Richtmittel an die Querkante 57 des Richttisches 55 geschoben und dadurch erstens so aufeinander ausgerichtet, dass sie sich gegenseitig vollständig bedecken, und zweitens in die richtige Lage für die Anbringung der Einzelfäden durch die Heftmaschine 58 gebracht. Die Heftmaschine 58 umfasst eine der Anzahl der Fadenverbindungen zwischen den beiden zu verbindenden Filterschichten entsprechende Anzahl von Heftapparaten 59 sowie nicht dargestellte Mittel zur gleichzeitigen Betätigung aller dieser Heftapparate. Die Anzahl der in der Heftmaschine 58 vorgesehenen Heftapparate 59 entspricht also bei der Herstellung von Filterschichtanordnungen nach den Fig. 1 und 2 der Anzahl der anzubringenden Einzelfäden und bei der Herstellung von Filterschichtanordnungen nach den Figuren 3 und 4 dem Doppelten der Anzahl der anzubringenden Einzelfäden. Nachdem die beiden aufeinanderliegenden Filterschichten durch die Richtmittel in die richtige Lage gebracht worden sind, werden sämtliche Heftapparate 59 der Heftmaschine 58 gleichzeitig betätigt und dadurch in der oben schon beschriebenen Weise die die beiden Filterschichten verbindenden Einzelfäden 4 bzw. 24 angebracht. Danach wird die nunmehr fertige Filterschichtanordnung 1 bzw. 21 durch in Fig. 5 nicht mit dargestellte absenkbare Transportbänder auf eine ebenfalls nicht dargestellte Sammelpalette transportiert. Hierzu werden die unter dem Richttisch angeordneten Transportbänder soweit angehoben, dass die Filterschichtanordnung auf den Transportbändern liegt, worauf die Transportbänder in Bewegung gesetzt werden und damit der Transport der Filterschichtanordnung zu der Sammelpalette in die Wege geleitet wird.

Die Ausbildung der zur Verbindung der beiden Filterschichten vorgesehenen Heftmaschine 58 ist in einer Seitenansicht in Fig. 6 gezeigt. Die Heftmaschine 58 umfasst eine der Anzahl der herzustellenden Fadenverbindungen zwischen den beiden Filterschichten entsprechende Anzahl von marktüblichen Heftapparaten 59, wie sie in den CH-A-559 606 und CH-A-665 017 im einzelnen näher beschrieben sind. Diese Heftapparate 59 sind in der in Fig. 6 dargestellten Seitenansicht der Heftmaschine 59 hintereinander angeordnet, so dass nur der vorderste Heftapparat 59 (bzw. bei Frontsicht auf die Heftmaschine 58 der äusserste rechte Heftapparat 59) in Fig. 6 sichtbar ist. Die einzelnen Heftapparate 59 sind mit einer Schraube 60, die in eine bei den marktüblichen Heftmaschinen bereits vorhandene Gewindebohrung eingeschraubt ist, an einer Blechlasche 61 befestigt, die einstückig mit einem Abstützblech 62 verbunden ist, das eine Drehung des Heftapparates 59 um die Befestigungsschraube 60 bei der Betätigung des Heftapparates 59 verhindert. Infolge der Befestigung der einzelnen Heftapparate 59 an der Heftmaschine 58 mittels nur einer Schraube 60 sind die einzelnen Heftapparate 59 bei Defekt leicht auswechselbar. Die einzelnen Abstützungsbleche 62 sind mittels der Senkschrauben 63 an einer über die gesamte Breite der Heftmaschine 58 reichenden Tragschiene 64 befestigt, die ihrerseits mittels der Schrauben 65 an der ebenfalls über die gesamte Breite der Heftmaschine 58 reichenden horizontalen U-Schiene 66 angebracht ist. Die horizontale U-Schiene 66 ist an ihren beiden Enden mittels der Schrauben 67 an je einer vertikalen U-Schiene 68 befestigt. An den beiden vertikalen U-Schienen 68 sind mittels der als Abstandhalter dienenden rechteckigen Hohlprofile 69 sowie der Endhalterungen 70 vertikale Führungsstangen 71 angebracht, die zur Führung von zwei den heb- und senkbaren Werktisch 72 tragenden Gleitmuffen 73 dienen. Zum Anheben und Absenken des Werktisches 72 sind zwei Druckzylinder 74 vorgesehen, die neben den Führungsstangen 71 (bzw. in der in Fig. 6 gezeigten Seitenansicht hinter der Führungsstange 71) angeordnet sind und die einerseits mit ihrem zylindrischen Teil 75 mittels Muttern 76 an der horizontalen U-Schiene 66 und andererseits mit ihrer Kolbenstange 77 mittels 78 sowie Muttern 79 an mit dem Werktisch 72 fest verbundenen Winkeleisen 80 angebracht sind. Die beiden vertikalen U-Schienen 68 sind ferner mit einer horizontalen Tragschiene 81 verbunden, die mit den Schrauben 82 an den U-Schienen 68 angebracht ist und an der mittels der Muttern 84 für jeden Heftapparat 59 ein Druckzylinder 83 zur Betätigung des betreffenden Heftapparates angebracht ist. Die Kolbenstangen 85 dieser Druckzylinder 83 sind an ihren vorderen Enden mit Rundstücken 86 von einer der Breite der Betätigungshebel 87 der Heftapparate 59 entsprechenden Breite versehen, an denen jeweils auf beiden Seiten den betreffenden Betätigungshebel 87 übergreifende und dadurch in seiner Querlage fixierende Führungsbleche 88 angebracht sind. Durch Betätigung der Druckzylinder 83 werden die Betätigungshebel 87 um ihre Drehachse 89 geschwenkt und betätigen dabei die zugeordneten Heftapparate 59. Im Zusammenhang mit dieser Anordnung von je einem Druckzylinder 83 für jeden Heftapparat 59 ist zu bemerken, dass dies deswegen von Vorteil ist. weil damit die einzelnen Heftapparate 59 der Heftmaschine 58 unabhängig voneinander betätigbar sind und infolgedessen bei verschiedenen Formaten der herzustellenden Filterschichtanordnungen jeweils nur diejenigen Heftapparate betätigt werden können, die bei dem betreffenden Format benötigt werden. Geht man jedoch von der Forderung ab, die Heftapparate 59 unabhängig voneinander betätigen zu können, — was im Prinzip dadurch möglich, wäre, dass man die nicht benötigten Heftapparate 59 nicht mit Heftfadenmagazinen beschickt sondern leer mitlaufen lässt — dann genügen zur Betätigung sämtlicher Heftapparate 59 schon zwei solche Druckzylinder 83, die an den beiden vertikalen U-Schienen 68 angebracht sind und deren Kolbenstangen durch eine horizontale Verbindungsstange verbunden sind, die auf die Betätigungshebel 87 von sämtlichen Heftapparaten 59 wirkt und sozusagen an die Stelle der einzelnen Rundstücke 86 stitt. Auch mit einer solchen Verbindungsstange wäre es natürlich möglich, Führungsbleche wie die Führungsbleche 88 zur Querfixierung der Betätigungshebel 87 vorzusehen.

Zur Wirkungsweise der in Fig. 6 gezeigten Heftmaschine 58 wäre zunächst zu sagen, dass diese Heftmaschine in erster Linie zur Herstellung von Filterschichtanordnungen nach den Figuren 1 und 2 geeignet ist, während man zur Herstellung von Filterschichtanordnungen nach den Figuren 3 und 4 jedenfalls dann, wenn man die oben erwähnten Vorteile der dort angewandten Verbindungsform ausschöpfen will, eine Heftmaschine benötigen würde, bei der der Abstand der jeweils einen Einzelfaden 24 anbringenden beiden Heftmaschinen variierbar ist. Dazu müssten die zu der Heftmaschine gehörenden Heftapparate in zwei Gruppen aufgeteilt sein und jede der beiden Gruppen je einen der zur Anbringung eines Einzelfadens 24 vorgesehenen beiden Heftapparate umfassen, und die Heftapparate der beiden Gruppen müssten an zwei gesonderten, gegeneinander in Horizontalrichtung verschiebbaren Tragorganen angebracht sein. Durch Horizontalverschiebung der beiden Tragorgane gegeneinander liesse sich dann der genannte Abstand der jeweils einen Einzelfaden 24 anbringenden beiden Heftapparate bei allen Heftapparaten gemeinsam variieren.

Die Wirkungsweise der in Fig. 6 gezeigten Heftmaschine ist im einzelnen folgende : Wie oben im Zusammenhang mit der Erläuterung der Fig. 5 bereits erwähnt, werden vor Beginn der Heftung die beiden miteinander zu verbindenden Filterschichten 90 und 91 durch die erwähnten Richtmittel 56 an die Längskante 92 und von weiteren Richtmitteln an die Querkante 57 des Richttisches 55 geschoben und dadurch in die richtige Lage für die Anbringung der Einzelfäden durch die Heftmaschine 58 gebracht. Der in Fig. 6 nicht gezeigte Richttisch ist dabei in der Darstellung in Fig. 6 links von dem von den beiden Führungsblechen 93 und 94 gebildeten Einführungsschlitz 95 für die beiden Filterschichten 90 und 91 in etwa gleicher Höhe wie derselbe angeordnet. Die beiden Führungsbleche 93 und 94 erstrecken sich über die gesamte Breite der Heftmaschine 58, wobei jedoch das Führungsblech 94 nur mit seinen hinteren, auf dem rechteckigen Längsstab 96 aufliegenden Teil durchgehend ist, während sich nach vorne nur jeweils zwischen den einzelnen Heftapparaten 59 angeordnete Zungen 97 erstrecken. Die Führungsbleche 93 und 94 sowie der Längsstab 96 sind mit Schrauben 98 auf dem Werktisch 72 befestig. Jeweils unterhalb der längsgeschlitzten Hohlnadel 99 jedes einzelnen Heftapparates 59 befindet sich im Führungsblech 93 sowie dem darunterliegenden Werktisch 72 eine Bohrung 100 für den Durchtritt der längsgeschitzten Hohlnadel 99. nach dem oben erwähnten Ausrichten der Filterschichten 90 und 91 wird nun mittels des Druckzylinders 74 der Werktisch 72 soweit angehoben, dass die Oberseite der Filterschicht 90 beinahe die Frontseiten 101 der Heftapparate 59 berührt. Dabei werden die Hohlnadeln 99 der Heftapparate 59 durch die Filterschichten 90 und 91 hindurchgestossen. Danach werden die Druckzylinder 83 betätigt und dadurch die Betätigungshebel 87 der Heftapparate 59 im Gegenuhrzeigersinn um ihre Achsen 89 geschwenkt. Durch diese Betätigung der Betätigungshebel 87 wird jeweils der erste Heftfaden der in den Zuführungsschlitzen 102 der Heftapparate 59 steckenden, nicht dargestellten Heftfadenmagazine mit seinem einen Querstäbchen (5 in Fig. 1 und 2 bzw. 25 oder 26 in Fig. 3 und 4) durch die längsgeschlitzte Hohlnadel 99 hindurchgeschoben, wobei das mit dem Querstäbchen verbundene Fadenende von dem Querstäbchen nachgezogen wird und so der betreffende Heftfaden an den Filterschichten 90 und 91 angebracht wird. Anschliessend wird die Kolbenstange 85 des Druckzylinders 83 wieder zurückgezogen und gleichzeitig der Werktisch 72 von dem Druckzylinder 74 wieder abgesenkt. Danach wird die nunmehr fertige Filterschichtanordnung von den im Zusammenhang mit der Fig. 5 erwähnten absenkbaren Transportbändern auf die ebenfalls in diesem Zusammenhang erwähnte Sammelpalette transportiert, und anschliessend werden dann zwei neue Filterschichten in den Einführungsschlitz 95 eingeführt.

**Ansprüche**

1. Filterschichtanordnung für Filterpressen mit zwei gesonderten, zur Bedeckung von je einer Filterplattenseite vorgesehenen, im wesentlichen rechteckigen Filterschichten und einer zum Ueberhängen der Filterschichtanordnung über eine Filterplatte oder einen Filterrahmen vorgesehenen, im Bereich von je einer Kante der beiden Filterschichten angeordneten Verbindung zwischen den beiden Filterschichten, wobei an diesen im Verbindungsbereich liegenden Kanten der beiden Filterschichten je eine nicht zu dem zur Bedeckung einer Filterplattenseite vorgesehenen Bereich der betreffenden Filterschicht gehörende Randzone vorgesehen ist und die Mittel zur Verbindung der beiden Filterschichten die zwischen dem zur Bedeckung einer Filterplattenseite vorgesehenen Bereich der einen Filterschicht und der Randzone derselben liegende Grenzlinie mit der entsprechenden Grenzlinie der anderen Filterschicht verbinden, dadurch gekennzeichnet, dass als Mittel zur Verbindung der beiden Filterschichten (2, 3 ; 22, 23) eine Vielzahl von auf die Breite der Filterschichtanordnung (1 ; 21) verteilten Einzelfäden (4 24) vorgesehen ist, die einander gegenüberliegende Punkte (9, 10 ; 32, 33) auf den beiden Grenzlinien (11, 12 30, 34) miteinander verbinden und an diesen Punkten (9, 10 ; 32, 33) die Filterschichten (2, 3 ; 22, 23) im wesentlichen lotrecht zu deren Schichtfläche durchstossen und die an ihren beiden Enden mit ein Durchrutschen des Einzelfadens (4 ; 24) durch die Filterschichten verhindernden Halteorganen (5, 6 ; 25, 26) verbunden sind.

2. Filterschichtanordnung nach Anspruch 1, dadurch gekennzeichnet, dass die Einzelfäden (4) jeweils von einer Aussenseite (7) der Filterschichtanordnung (1) durch die beiden miteinander verbundenen Filterschichten (2, 3) hindurch zur anderen Aussenseite (8) der Filterschichtanordnung (1) verlaufen und an beiden Aussenseiten (7, 8) der Filterschichtanordnung (1) mit Halteorganen (5, 6) verbunden sind.

3. Filterschichtanordnung nach Anspruch 2, dadurch gekennzeichnet, dass die Einzelfäden (4) im gleichen Abstand voneinander längs der Grenzlinien (11, 12) angeordnet sind, vorzugsweise in einem Abstand zwischen 5 und 10 cm.

4. Filterschichtanordnung nach Anspruch 1, dadurch gekennzeichnet, dass die Einzelfäden (24) jeweils von einer Aussenseite (27) der Filterschichtanordnung (21) zunächst durch die beiden miteinander verbundenen Filterschichten (22, 23) hindurch zur anderen Aussenseite (28) der Filterschichtanordnung (21) und dann von dem Durchstosspunkt (29) auf dieser anderen Aussenseite (28), vorzugsweise im wesentlichen parallel zu der Grenzlinie (30) der betreffenden Filterschicht (23), zu einem anderen Durchstosspunkt (31) auf dieser anderen Aussenseite (28) und von dort wieder durch die beiden miteinander verbundenen Filterschichten (22, 23) hindurch zu der genannten einen Aussenseite (27) der Filterschichtanordnung (21) verlaufen und demgemäss nur an dieser einen Aussenseite (27) der Filterschichtanordnung (21) mit Halteorganen (25, 26) verbunden sind.

5. Filterschichtanordnung nach Anspruch 4, dadurch gekennzeichnet, dass die die beiden Grenzlinien (30, 34) miteinander verbindenden Einzelfadenabschnitte im gleichen Abstand voneinander längs der Grenzlinien (30, 34) angeordnet sind, vorzugsweise in einem Abstand zwischen 3 und 10 cm.

6. Filterschichtanordnung nach einem der Ansprüche 1 bis 5, dadurch gekennzeichnet, dass jeder Einzelfaden (4 ; 24) mit beiden zugeordneten Halteorganen (5, 6 ; 25, 26) einstückig verbunden ist.

7. Filterschichtanordnung nach Anspruch 6, dadurch gekennzeichnet, dass die Halteorgane jedes Einzelfadens (4 24) aus an den beiden Enden des Einzelfadens quer zu diesen angeordneten und einstückig mit diesen verbundenen Querstäbchen (5, 6 ; 25, 26) aus dem gleichen Material wie dem des Einzelfadens bestehen.

8. Filterschichtanordnung nach einem der Ansprüche 1 bis 3, dadurch gekennzeichnet, dass jeder Einzelfaden mit einem der beiden zugeordneten Halteorgane einstückig verbunden ist.

9. Filterschichtanordnung nach Anspruch 8, dadurch gekennzeichnet, dass jeder Einzelfaden an seinem einen Ende einstückig mit einem Halteorgan verbunden ist und an seinem anderen Ende mit einem in das andere dem Faden zugeordnete Halteorgan ingreifenden und sich dort bei Zugbelastung des Fadens verklemmenden oder verhakenden Kopfstück versehen ist.

10. Filterschichtanordnung nach Anspruch 4 oder 5, dadurch gekennzeichnet, dass jeder Einzelfaden an seinen beiden Enden mit je einem in das zugeordnete Halteorgan eingreifenden und sich dort bei Zugbelastung des Fadens verklemmenden oder verhakenden Kopfstück versehen ist.

11. Filterschichtanordnung nach einem der Ansprüche 1 bis 10, dadurch gekennzeichnet, dass die Einzelfäden (4 ; 24) und die zugeordneten Halteorgane (5, 6 ; 25, 26) aus Kunststoff, vorzugsweise aus einem Polyamid, bestehen.

12. Filterschichtanordnung nach den Ansprüchen 7 und 11, dadurch gekennzeichnet, dass die Einzelfäden (4 ; 24) sowie die Querstäbchen (5, 6 ; 25, 26) an deren Fadenenden aus Nylon bestehen.

13. Verfahren zur Herstellung einer Filterschichtanordnung nach Anspruch 1, dadurch gekennzeichnet, dass die die beiden Filterschichten der Filterschichtanordnung verbindenden Einzelfäden mit Heftapparaten angebracht werden.

14. Verfahren nach Anspruch 13, dadurch gekennzeichnet, dass als Heftapparate an sich zur Etikettenbefestigung vorgesehene Heftapparate und als Einzelfäden die für diese Heftapparate vorgesehenen Heftfäden verwendet werden.

15. Verfahren nach Anspruch 13 oder 14 zur Herstellung einer Filterschichtanordnung nach den Ansprüchen 2 und 7, dadurch gekennzeichnet, dass Einzelfäden verwendet werden, die mit mindestens einem der beiden als Halteorgane dienenden Querstäbchen biegsam verbunden sind, und zur Anbringung eines Einzelfadens zunächst eine Teil des Heftapparates bildende längsgeschlitzte Hohlnadel an der für die Anbringung des Einzelfadens vorgesehenen Stelle im wesentlichen lotrecht zur Schichtfläche der Filterschichten durch die beiden zu verbindenden, aufeinanderliegenden Filterschichten hindurchgestossen wird und danach in die Hohlnadel das mit dem Einzelfaden beigsam verbundene Querstäbchen derart eingeführt wird, dass der Ansatz des Einzelfadens an dem Querstäbchen innerhalb des Längsschlitzes der Hohlnadel liegt, und dass anschliessend das Querstäbchen durch die Hohlnadel und damit durch die beiden von derselben durchstossenen Filterschichten hindurchgeschoben wird, wobei der mit dem Querstäbchen biegsam verbundene Einzelfaden von dem Querstäbchen mit durch die Filterschichten hindurchgezogen und dabei an seiner Ansatzstelle am Querstäbchen während des Hindurchziehens in Längsrichtung der Hohlnadel umgebogen wird und wobei sich das Querstäbchen nach dem Hindurchschieben durch die Hohlnadel wieder quer zu dem mit durch die Filterschichten hindurchgezogenen Einzelfaden zu stellen beginnt, und dass schliesslich die Hohlnadel rückwärts aus den Filterschichten herausgezogen wird, wobei das Querstäbchen ein gleichzeitiges Herausziehen des durch die Filterschichten hindurchgezogenen Einzelfaden verhindert.

16. Verfahren nach Anspruch 13 oder 14 zur Herstellung einer Filterschichtanordnung nach dem Anspruch 4 oder 7, dadurch gekennzeichnet, dass Einzelfäden verwendet werden, die mit beiden als Halteorgane dienenden Querstäbchen biegsam verbunden sind, und zur Anbringung eines Einzelfadens zunächst zwei Teile der Heftapparate bildende längsgeschlitzte Hohlnadeln an den beiden Durchstosspunkten im wesentlichen lotrecht zur Schichtfläche der Filterschichten durch die beiden zu verbindenden, aufeinanderliegenden Filterschichten hindurchgestossen werden und danach in die beiden Hohlnadeln je eines der beiden mit den beiden Enden des Einzelfadens biegsam verbundenen Querstäbchen derart eingeführt wird, dass der Ansatz des Einzelfadens an dem Querstäbchen innerhalb des Längsschlites der betreffenden Hohlnadel liegt, und dass anschliessend die beiden Querstäbchen durch die Hohlnadeln und damit durch die beiden von denselben durchstossenen Filterschichten hindurchgeschoben werden, wobei jedes der beiden mit je einem Querstäbchen biegsam verbundenen Einzelfadenenden von dem betreffenden Querstäbchen mit durch die Filterschichten hindurchgezogen und dabei an seiner Ansatzstelle an dem betreffenden Querstäbchen während des Hindurchziehens in Längsrichtung der betreffenden Hohlnadel umgebogen wird und wobei sich jedes der beiden Querstäbchen nach dem Hindurchschieben durch die Hohlnadel wieder quer zu dem von ihm mit durch die Filterschichten hindurchgezogenen Einzelfadenende zu stellen beginnt, und dass schliesslich die beiden Hohlnedeln rückwärts aus den Filterschichten herausgezogen werden, wobei die beiden Querstäbchen ein gleichzeitiges Herausziehen der durch die Filterschichten hindurchgezogenen beiden Einzelfadenenden verhindern.

17. Verfahren nach einem der Ansprüche 13 bis 16, dadurch gekennzeichnet, dass sämtliche die beiden Filterschichten der Filterschichtanordnung verbindenden Einzelfäden gleichzeitig angebracht werden.

18. Einrichtung zur Durchführung des Verfahrens nach Anspruch 13, gekennzeichnet durch eine Heftmaschine (58) mit einer der Anzahl der Fadenverbindungen zwischen den beiden Filterschichten (2, 3 ; 22, 23) der Filterschichtanordnung (1 ; 21) entsprechenden Anzahl von Heftapparaten (59) sowie Mitteln zur gleichzeitigen Betätigung aller dieser Heftapparate.

19. Einrichtung nach Anspruch 18 zur Durchführung des Verfahrens nach Anspruch 15, dadurch gekennzeichnet, dass die Anzahl der Heftapparate (59) der Anzahl der zur Verbindung der beiden Filterschichten (2, 3) der Filterschichtanordnung (1) anzubringenden, je eine Fadenverbindung zwischen den beiden Filterschichten (2, 3) herstellenden Einzelfäden (4) entspricht.

20. Einrichtung nach Anspruch 18 zur Durchführung des Verfahrens nach Anspruch 16, dadurch gekennzeichnet, dass die Anzahl der Heftapparate (59) dem Doppelten der Anzahl der zur Verbindung der beiden Filterschichten (22, 23) der Filterschichtanordnung (21) anzubringenden, je zwei Fadenverbindungen zwischen den beiden Filterschichten (22, 23) herstellenden Einzelfäden (24) entspricht.

21. Einrichtung nach einem der Ansprüche 18 bis 20 an einer Filterschichtenstrasse, gekennzeichnet durch Wende- und Richtmittel (49-57), die von den von der Filterschichtenstrasse angelieferten Filterschichten (48) jede zweite umwenden und die jeweils nachfolgende oder die jeweils vorangehende nicht umgewendete Filterschicht auf diese umgewendete Filterschicht transportieren und die beiden aufeinanderliegenden Filterschichten derart aufeinander ausrichten, dass sie sich gegenseitig vollständig bedecken, und in diesem Zustand der Heftung zuführen und die zwischen einem die fertig zugeschnittenen Filterschichten einzeln nacheinander anliefernden Ausgang (45) der Filterschichtenstrasse und der Heftmaschine (58) angeordnet sind.

### Claims

1. A filter-layer arrangement for filter-presses with two separate, essentially rectangular filter-layers, each of said filter-layers being provided for covering one filter plate-side, and a connection between said two filter-layers, said connection between said two filter-layers being arranged in the region of one edge of each of both of said filter-layers and being provided for hanging said filter-layer arrangement over a filter-plate or over a filter-frame, a border zone being provided at each of said edges of said two filter-layers lying in the region of said connection, said border zone not belonging to said region of said respective filter-layer provided for covering one of said filter plate-sides, and means for connecting said two filter-layers, said means connecting the borderline lying between said region of one of said two filter-layers provided for covering one filter plate-side and said border-zone of that filter-layer with the corresponding border-line of the other filter-layer, characterized in that as said means for connecting said two filter-layers (2, 3 ; 22, 23) a multiplicity of individual filaments (4 ; 24) is provided, said filaments being distributed across the width of said filter-layer arrangement (1 ; 21), said filaments connecting together points (9, 10 ; 32, 33) on said two border-lines (11, 12 ; 30, 34) lying opposite each other and piercing said filter-layers (2, 3 ; 22, 23) at said points (9, 10 ; 32, 33) essentially perpendicular to the surface of said filter-surfaces and said filaments being joined at both ends to retaining elements (5, 6 ; 25, 26), said retaining elements preventing said individual filaments (4, 24) from slipping through said filter-layers.

2. A filter-layer arrangement according to claim 1, characterized in that each of the said individual filaments (4) passes from one (7) outer-side of said filter-layer arrangement (1) through both of said interconnected filter-layers (2, 3) to the other (8) outer-side of said filter-layer arrangement (1) and is joined to said retaining elements (5, 6) at both outer-sides (7, 8) of said filter-layer arrangement (1).

3. A filter-layer arrangement according to claim 2, characterized in that said individual filaments (4) are arranged along said border-lines (11, 12) at the same distance from each other, preferably at a distance of between 5 and 10 cm.

4. A filter layer arrangement according to claim 1, characterized in that each of the said individual filaments (24) passes from one (27) outer-side of said filter-layer arrangement (21) firstly through said two interconnected filter-layers (22, 23) to the other (28) outer-side of said filter-layer arrangement (21) and then from the penetration-point (29) on said other (28) outerside, preferably essentially in parallel to said border-line (30) of the relevant filter-layer (23), to another penetration-point (31) on said other (28) outerside and from there again through both of said interconnected filter-layers (22, 23) to said one (27) outer-side of said filter-layer arrangement (21) and, thus, is joined to said retaining elements (25, 26) at only said one (27) outer-side of said filter-layer arrangement (21).

5. A filter-layer arrangement according to claim 4, characterized in that those individual filament-sections connecting together the two said border-lines (30, 34) are arranged along said border-lines (30, 34) at the same distance from each other, preferably at a distance of between 3 and 10 cm.

6. A filter-layer arrangement according to one of claims 1 through 5, characterized in that each said individual filament (4 ; 24) is joined to both associated retaining elements (5, 6 ; 25, 26) in one piece.

7. A filter-layer arrangement according to claim 6, characterized in that the said retaining elements of each said individual filament (4 ; 24) consist of small transverse bars (5, 6 ; 25, 26) being arranged transversely at each end of each said individual filament and being joined to said ends in one piece and consist of the same material as said individual filament.

8. A filter-layer arrangement according to one of claims 1 through 3, characterized in that each said individual filament is joined to one of said two associated retaining elements in one piece.

9. A filter-layer arrangement according to claim 8, characterized in that each said individual filament is at one end joined to a retaining element in one piece and at the other end provided with a head-piece engaging said other retaining element associated with said filament and there wedging or hooking into place under tensile loading of the said filament.

10. A filter-layer arrangement according claim 4 or 5, characterized in that each said individual filament is provided at each end with a head-piece engaging said associated retaining element and there wedging or hooking into place under tensile loading of the said filament.

11. A filter-layer arrangement according to one of claims 1 through 10, characterized in that said individual filaments (4 ; 24) and said associated retaining elements (5, 6 ; 25, 26) consist of plastic, preferably a polyamide.

12. A filter-layer arrangement according to claims 7 and 11, characterized in that said individual filaments (4 ; 24) as well as said small transverse bars (5, 6 ; 25, 26) at the ends of said filaments consist of nylon.

13. A method for producing a filter-layer arrangement according to claim 1, characterized in that said individual filaments connecting said two filter-layers of said filter-layer arrangement are installed by means of a stitching apparatus.

14. A method according to claim 13, characterized in that a stitching apparatus actually intended for attaching labels is employed as said stitching apparatus and that stitching filaments provided for said stitching apparatus are employed as said individual filaments.

15. A method according to claim 13 or 14 for producing a filter-layer arrangement according to claims 2 and 7, characterized in that individual filaments are employed, which individual filaments being joined bendably to at least one of said two small transverse bars acting as said retaining elements and that, for installing a said individual filament, a longitudinally slit hollow needle forming part of said stitching apparatus is first thrust through said two filter-layers, lying one on top of the other, to be connected, essentially perpendicularly to the layer-surface of said filter-layers at the place provided for installing said individual filament and that, the said small transverse bar being joined bendably to said individual filament is then so inserted into said hollow needle that the junction of said individual filament with said small transverse bar lies within said longitudinal slit of said hollow needle, and that said small transverse bar is then pushed through said hollow needle and hence through said two filter-layers pierced by said hollow needle, said individual filament, being joined bendably to said small transverse bar, being also drawn through said filter-layers by said small transverse bar and in so doing being bent over at the said junction of said individual filament with said small transverse bar in the longitudinal direction of said hollow needle during drawing-through, and said small transverse bar, having been pushed through said hollow needle, again beginning to assume a position transverse to the said individual filament having been drawn through said filter-layers, and that, finally, said hollow needle is withdrawn rearwards out of said filter-layers, said small transverse bar preventing said individual filament having been drawn through said filter-layers from being withdrawn at the same time.

16. A method according to claim 13 or 14 for producing a filter-layer arrangement according to claim 4 or 7, characterized in that individual filaments are employed, which individual filaments being joined bendably to both of said two small transverse bars acting as said retaining elements and that, for installing a said individual filament, two longitudinally slit hollow needles forming parts of said stitching apparatus are first thrust at said two penetration-points through said two filter-layers, lying one on top of the other, to be connected, essentially perpendicularly to the layer-surface of said filter-layers and that the two said small transverse bars being joined bendably to both ends of said individual filament are then so inserted into said two hollow needles that the junctions of said individual filament with said small transverse bars ly within said longitudinal slits of the said two hollow needles, and that both said small transverse bars are then pushed through said hollow needles and hence through said two filter-layers pierced by said hollow needles, each end of said individual filament, being joined bendably to a said small transverse bar, being also drawn through said filter-layers by the respective said small transverse bar and in so doing being bent over at the said junction of the respective said individual filament with the respective said small transverse bar in the longitudinal direction of the respective said hollow needle during drawing-through, and each said small transverse bar, having been pushed through said hollow needles, again beginning to assume a position transverse to that end of the said individual filament having been drawn by said small transverse bar through said filter-layers, and that, finally, both the said hollow needles are withdrawn rearwards out of said filter-layers, both of said small transverse bars preventing both said ends of said individual filament having been drawn through said filter-layers from being withdrawn at the same time.

17. A method according to one of claims 13 through 16, characterized in that all the said individual filaments connecting said two filter-layers of said filter-layer arrangement are installed simultaneously.

18. An installation for carrying out the said method according to claim 13, characterized by a stitching machine (58) comprising a number of stitching apparatus (59) corresponding to the number of filament-connections between the said two filter-layers (2, 3 ; 22, 23) of said filter-layer arrangement (1 ; 21) and means for actuating all the said stitching apparatus simultaneously.

19. An installation according to claim 18 for carrying out the said method according to claim 15, characterized in that the number of said stitching apparatus (59) corresponds to the number of individual filaments (4) to be installed to connect the said two filter-layers (2, 3) of said filter-layer arrangement (1), each said individual filament establishing a filament-connection between said two filter-layers (2, 3).

20. An installation according to claim 18 for carrying out the said method according to claim 16, characterized in that the number of the said stitching apparatus (59) corresponds to twice the number of the said individual filaments (24) to be installed to connect the said two filter-layers (22, 23) of said filter-layer arrangement (21), each said individual filament establishing two filament-connections between the said filter-layers (22, 23).

21. An installation according to one of claims 18 through 20 in a filter-layer production line, characterized by means (49-57) for turning and aligning, said means turning every second one of said filter-layers (48) fed by the said filter-layer production line and conveying each following or preceding non-turned said filter-layer onto the said turned filter-layer and aligning both filter-layers lying one on top of the other in such a manner that the two said filter-layers lying one on top of the other lie congruent with respect to each other and passing on the said two filter-layers lying one on top of the other in this state for stitching, and said means being arranged between an exit (45) in the said filter-layer production line feeding the said filter-layers individually one after the other, said filter-layers being already cut to size, and the said stitching machine (58).

## Revendications

1. Agencement de couches filtrantes pour filtres-presses, comprenant deux couches filtrantes séparées sensiblement rectangulaires prévues pour le recouvrement respectivement d'une face de plaque filtrante, et une liaison disposée au voisinage respectivement d'un bord des deux couches filtrantes et prévues pour la suspension de l'agencement de couches filtrantes au-dessus d'une plaque filtrante ou d'un cadre de filtre, auquel cas sur ces bords des deux couches filtrantes, situés dans la région de liaison, est prévue respectivement une zone marginale n'appartenant pas à la portion de la couche filtrante concernée qui est prévue pour le recouvrement d'une face de plaque filtrante, et les moyens de liaison des deux couches filtrantes relient la ligne de limitation située entre la région de l'une des couches filtrantes, prévue pour le recouvrement d'une face de plaque filtrante, et la zone marginale de celle-ci, à la ligne de limitation correspondante de l'autre couche filtrante, caractérisé en ce que comme moyen de liaison des deux couches filtrantes (2, 3 ; 22, 23) est prévue une pluralité de fils individuels (4 ; 24) répartis sur la largeur de l'agencement de couches filtrantes (1 ; 21), lesquels fils individuels relient entre eux des points mutuellement opposés (9, 10 ; 32, 33) sur les deux lignes de limitation (11, 12 ; 30, 34) et traversent, en ces points (9, 10 ; 32, 33), les couches filtrantes (2, 3 ; 22, 23) sensiblement perpendiculairement à leur surface de couche et qui sont reliés, à leurs deux extrémités, à des organes de retenue (5, 6 ; 25, 26) empêchant un glissement du fil individuel (4 ; 24) à travers les couches filtrantes.

2. Agencement de couches filtrantes selon la revendication 1, caractérisé en ce que les fils individuels (4) s'étendent respectivement d'une face extérieure (7) de l'agencement de couches filtrantes (1) à travers les deux couches filtrantes (2, 3) reliées entre elles jusqu'à l'autre face extérieure (8) de l'agencement de couches filtrantes (1) et sont reliés, sur les deux faces extérieures (7, 8) de l'agencement de couches filtrantes (1), à des organes de retenue (5, 6).

3. Agencement de couches filtrantes selon la revendication 2, caractérisé en ce que les fils individuels (4) sont disposés à une distance d'écartement égale les uns des autres le long des lignes de limitation (11, 12), et de préférence à un intervalle compris entre 5 et 10 cm.

4. Agencement de couches filtrantes selon la revendication 1, caractérisé en ce que les fils individuels (24) s'étendent respectivement d'une face externe (27) de l'agencement de couches filtrantes (21) tout d'abord à travers les deux couches filtrantes (22, 23) reliées entre elles jusqu'à l'autre face externe (28) de l'agencement de couches filtrantes (21) et ensuite du point de traversée (29) sur cette autre face externe (28), de préférence sensiblement parallèlement à la ligne de limitation (30) de la couche filtrante concernée (23), jusqu'à un autre point de traversée (31) sur cette autre face externe (28) et, de là, de nouveau à travers les deux couches filtrantes (22, 23) reliées entre elles, jusqu'à la face externe mentionnée (27) de l'agencement de couches filtrantes (21), et sont par conséquent reliés à des organes de retenue (25, 26) seulement sur cette face externe (27) de l'agencement de couches filtrantes (21).

5. Agencement de couches filtrantes selon la revendication 4, caractérisé en ce que les segments de fils individuels, reliant les deux lignes de limitation (30, 34) entre elles, sont disposés à la même distance d'écartement l'un de l'autre le long des lignes de limitation (30, 34), de préférence à un intervalle compris entre 3 et 10 cm.

6. Agencement de couches filtrantes, selon l'une des revendications 1 à 5, caractérisé en ce que chaque fil individuel (4 ; 24) est relié en une seule pièce aux deux organes de retenue associés (5, 6 ; 25, 26).

7. Agencement de couches filtrantes selon la revendication 6, caractérisé en ce que les organes de retenue de chaque fil individuel (4 ; 24) sont constitués par des bâtonnets transversaux (5, 6 ; 25, 26) de la même matière que celle du fil individuel et disposés aux deux extrémités du fil individuel transversalement à celui-ci et reliés en une seule pièce à celle-ci.

8. Agencement de couches filtrantes selon l'une des revendications 1 à 3, caractérisé en ce que chaque fil individuel est relié en une seule pièce à l'un des deux organes de retenue associés.

9. Agencement de couches filtrantes selon la revendication 8, caractérisé en ce que chaque fil individuel est relié, à l'une de ses extrémités, en une seule pièce à un organe de retenue et est pourvu, à son autre extrémité, d'une pièce de tête pénétrant dans l'autre organe de retenue associé au fil et s'y coinçant ou accrochant lors d'une charge du fil en traction.

10. Agencement de couches filtrantes selon la revendication 4 ou 5, caractérisé en ce que chaque fil individuel est muni, à ses deux extrémités, respectivement d'une pièce de tête pénétrant dans l'organe de retenue associé et s'y coinçant ou accrochant lors d'une charge du fil en traction.

11. Agencement de couches filtrantes selon l'une des revendications 1 à 10, caractérisé en ce que les fils individuels (4 ; 24) et les organes de retenue associés (5, 6 ; 25, 26) sont constitués en matière synthétique, de préférence en une polyamide.

12. Agencement de couches filtrantes selon les revendications 7 et 11, caractérisé en ce que les fils individuels (4 ; 24) ainsi que les bâtonnets transversaux (5, 6 ; 25, 26) sur leurs extrémités de fil sont constitués en nylon.

13. Procédé de fabrication d'un agencement de couches filtrantes selon la revendication 1, caractérisé en ce que les fils individuels, reliant les deux couches filtrantes de l'agencement de couches filtrantes, sont fixés par des agrafeuses.

14. Procédé selon la revendication 13, caractérisé en ce qu'on utilise, comme agrafeuses, des agrafeuses prévues en soi pour la fixation d'étiquettes, et, comme fils individuels, les faufils prévus pour ces agrafeuses.

15. Procédé selon la revendication 13 ou 14, pour la fabrication d'un agencement de couches filtrantes selon les revendications 2 et 7, caractérisé en ce qu'on utilise des fils individuels qui sont reliés de façon flexible à au moins l'un des deux bâtonnets transversaux servant d'organes de retenue et, pour la fixation d'un fil individuel, une aiguille creuse longitudinalement fondue, formant une partie de l'agrafeuse, est poussée au travers des deux couches filtrantes superposées à relier, sensiblement perpendiculairement à la surface de couche des couches filtrantes, à l'emplacement prévu pour la fixation du fil individuel et, après cela, le bâtonnet transversal, relié de façon flexible au fil individuel, est inséré de telle façon dans l'aiguille creuse que le bout du fil individuel sur le bâtonnet transversal est situé à l'intérieur de la fente longitudinale de l'aiguille creuse et en ce qu'ensuite le bâtonnet transversal est poussé à travers l'aiguille creuse et, ainsi, à travers les deux couches filtrantes traversées par celle-ci, auquel cas le fil individuel, relié de façon flexible au bâtonnet transversal, est tiré conjointement par le bâtonnet transversal à travers les couches filtrantes et est alors replié, pendant le tirage au travers, en direction longitudinale de l'aiguille creuse en son point d'embase sur le bâtonnet transversal et auquel cas le bâtonnet transversal commence, après le déplacement à travers l'aiguille creuse à se placer de nouveau transversalement au fil individuel tiré au travers des couches filtrantes, et en ce qu'enfin l'aiguille creuse est extraite à rebours des couches filtrantes, auquel cas le bâtonnet transversal empêche une extraction simultanée du fil individuel tiré au travers des couches filtrantes.

16. Procédé selon la revendication 13 ou 14, pour la fabrication d'un agencement de couches filtrantes selon la revendication 4 ou 7, caractérisé en ce qu'on utilise des fils individuels qui sont reliés de façon flexible aux deux bâtonnets transversaux servant d'organes de retenue et, pour la fixation d'un fil individuel, tout d'abord deux aiguilles creuses longitudinalement fendues, faisant partie de l'agrafeuse, sont poussées, aux deux emplacements de traversée, sensiblement perpendiculairement à la surface de couche des couches filtrantes, à travers les deux couches filtrantes superposées à relier et, après cela, respectivement l'un des deux bâtonnets transversaux, reliés de façon flexible aux deux extrémités du fil individuel, est inséré de telle façon dans les deux aiguilles creuses que l'embase du fil individuel sur les bâtonnets transversaux est située à l'intérieur de la fente longitudinale de l'aiguille creuse concernée, et en ce qu'enfin les deux bâtonnets transversaux sont poussés à travers les aiguilles creuses et, ainsi, à travers les deux couches filtrantes traversées par celles-ci, auquel cas chacune des extrémités de fil individuel, reliées de façons flexibles respectivement à un bâtonnet transversal, est tirée conjointement par le bâtonnet transversal concerné, au travers des couches filtrantes et repliée alors en direction longitudinale de l'aiguille concernée, pendant le tirage au travers, en son point d'embase sur le bâtonnet transversal concerné et auquel cas chacun des deux bâtonnets transversaux commence, après le déplacement au travers de l'aiguille creuse, à se placer de nouveau transversalement à l'extrémité de fil individuel tirée conjointement par lui au travers des couches filtrantes, et en ce que finalement les deux aiguilles creuses sont extraites à rebours des couches filtrantes, auquel cas les deux bâtonnets transversaux empêchent une extraction simultanée des deux extrémités de fil individuel tirées au travers des couches filtrantes.

17. Procédé selon l'une des revendications 13 à 16, caractérisé en ce que tous les fils individuels, reliant les deux couches filtrantes de l'agencement de couches filtrantes, sont montés simultanément.

18. Dispositif pour l'exécution du procédé selon la revendication 13, caractérisé par une machine piqueuse (58) avec un nombre d'agrafeuses (59) correspondant au nombre des liaisons de fil entre les deux couches filtrantes (2, 3 ; 22, 23) de l'agencement de couches filtrantes (1 ; 21) ainsi que par des moyens pour l'actionnement simultané de toutes ces agrafeuses.

19. Dispositif selon la revendication 18, pour l'exécution du procédé selon la revendication 15, caractérisé en ce que le nombre des agrafeuses (59) correspond au nombre des fils individuels (4) à fixer pour la liaison des deux couches filtrantes (2, 3) de l'agencement de couches filtrantes (1) et établissant respectivement une liaison de fil entre les deux couches filtrantes (2, 3).

20. Dispositif selon la revendication 18 pour l'exécution du procédé selon la revendication 16, caractérisé en ce que le nombre des agrafeuses (59) correspond au double du nombre des fils individuels (24) à fixer pour la liaison des deux couches filtrantes (22, 23) de l'agencement de couches filtrantes (21) et établissant respectivement deux liaisons de fil entre les deux couches filtrantes (22, 23).

21. Dispositif selon l'une des revendications 18 à 20 sur une chaîne de fabrication de couches filtrantes, caractérisé par des moyens de retournement et d'alignement (49-57) qui, parmi les couches filtrantes (48) amenées par la chaîne de couches filtrantes, retournent chaque seconde couche filtrante et transportent la couche filtrante respectivement suivante ou la couche filtrante respectivement précédente non retournée sur cette couche filtrante retournée et alignent les deux couches filtrantes superposées de telle façon l'une par rapport à l'autre qu'elles se recouvrent mutuellement complètement et les amènent, dans cet état, à l'agrafage, et lesquels sont disposés entre une sortie (45) de la chaîne de couches filtrantes amenant séparément et successivement les couches filtrantes découpées à l'état fini et la machine piqueuse (58).

**0 053 779**

Fig. 1

Fig. 2

Fig. 3

Fig. 4

Fig. 5

Fig. 6